(19) **Europäisches Patentamt**
**European Patent Office**
**Office européen des brevets**

(11) EP 2 678 835 B1

(12) **EUROPEAN PATENT SPECIFICATION**

(45) Date of publication and mention
of the grant of the patent:
**09.08.2017  Bulletin 2017/32**

(51) Int Cl.:
*G08B 13/00* (2006.01)   *G06T 7/00* (2017.01)
*G08G 5/06* (2006.01)   *G06K 9/00* (2006.01)
*H04N 7/18* (2006.01)

(21) Application number: **12748886.4**

(22) Date of filing: **21.02.2012**

(86) International application number:
**PCT/SG2012/000052**

(87) International publication number:
**WO 2012/115594 (30.08.2012 Gazette 2012/35)**

(54) **A SURVEILLANCE SYSTEM AND A METHOD FOR DETECTING A FOREIGN OBJECT, DEBRIS, OR DAMAGE IN AN AIRFIELD**

ÜBERWACHUNGSSYSTEM UND VERFAHREN ZUR ERKENNUNG VON FREMDKÖRPERN, ABFÄLLEN ODER BESCHÄDIGUNGEN AUF EINEM FLUGZEUGLANDEPLATZ

SYSTÈME DE SURVEILLANCE ET PROCÉDÉ DE DÉTECTION DE CORPS ÉTRANGER, DE DÉBRIS OU D'ENDOMMAGEMENT DANS UN TERRAIN D'AVIATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.02.2011  SG 201101223**

(43) Date of publication of application:
**01.01.2014  Bulletin 2014/01**

(73) Proprietor: **Stratech Systems Limited
Singapore 609921 (SG)**

(72) Inventor: **CHEW, Khien Meow David
Singapore 269905 (SG)**

(74) Representative: **Kuhnen & Wacker
Patent- und Rechtsanwaltsbüro
Prinz-Ludwig-Straße 40A
85354 Freising (DE)**

(56) References cited:
**EP-A1- 1 455 199     WO-A1-2009/029051
WO-A1-2009/029051     FR-A1- 2 683 356
US-A1- 2004 080 433     US-A1- 2006 098 843
US-A1- 2007 040 062     US-A1- 2010 278 387**

• **DONGMING CHEN ET AL: "Study on Bomb Sound Signal De-noising in Spotting the Point of Impact of Weapons", 2006 6TH WORLD CONGRESS ON INTELLIGENT CONTROL AND AUTOMATION, vol. 2, 23 June 2006 (2006-06-23), pages 5233-5235, XP055139946, DOI: 10.1109/WCICA.2006.1714528 ISBN: 978-1-42-440332-5**

## Description

### Field of the Invention

The present invention relates broadly to a surveillance system and method for detecting a foreign object, debris, or damage in an airfield, in particular, for airfield surveillance (including surveillance of a runway and/or taxiway and/or access routes and/or infield/grass fields and/or apron and/or pavements in the airfield), foreign object, debris (FOD) and damage (cracks, crater, spall, UXO, camouflet) detection/measurement/classification and airfield damage assessment.

### Background

Runway surveillance is very important for airport operation. Runways are continuously subjected to damages, such as potholes created as a result of wear and tear of aircraft or other vehicles using the runways. Occasionally, debris or foreign objects may occur on runways, which can be due to jet blast, aircraft take-off / landing, natural causes etc. On an active runway involving the movement of aircrafts, the presence of Foreign Object, Debris or Damage (FOD) may lead to an air crash and consequential loss of life resulting in significant losses to airline companies.

Different methods are employed to conduct runway surveillance. Conventionally, inspection officers move around the airport runways to conduct visual and manual surveillance, periodically. Visual inspection is slow, and labor intensive. Furthermore, visual inspection is unreliable as it is subjected to conditions surrounding the runway.

Some airports use automated systems employing radar to detect damages, debris and other hazards on an airport runway and its adjacent areas. In a system using radar, a microwave signal is usually transmitted over a runway and reflected signals from any foreign object are detected and analyzed. Since the microwave signals are pulsed or structured, the time taken for the signal to reach the receiver is calculated from which the distance to the foreign object is derived. By using radar sensors having smaller wavelengths and higher pulse repetition frequencies, it is possible to achieve higher resolution in range, which in turn, may reduce the background clutter.

However, a system using any radar for runway surveillance has its own limitations. While radar is an excellent means to detect metal objects, it is less sensitive in detecting non-metallic objects, such as rubber. Objects made of materials having poor radar signature (e.g. rubber) can cause major problems for such radar-based systems. Further, radar may not be relied upon for detecting smaller non-metallic objects. Further limitations include radar blind spots or shadows due to blockages caused by other objects or infrastructure. In addition, radar may trigger a false alarm by indicating a strong signal for signals reflected from even small metal objects that may not be so hazardous. A radar based surveillance system thus lacks "intelligence" and suffers from inability to provide visual image of the object for verification and characterization by the operator.

Some airports utilize infrared or thermal-imaging systems to detect objects, cracks voids etc. on a runway. However, systems employing infrared or thermal-imaging systems can only sense the infrared radiation (emitted from objects), which is outside the thermal equilibrium of the surroundings i.e. a infrared or a thermal imaging system can only detect objects (e.g. a piece of warm metal debris on a cool runway) which have sufficient thermal contrast. Small objects which have poor thermal contrast may pose significant challenges for infrared / thermal imaging system. Further, the performance of such systems is unpredictable under adverse weather (e.g. cold weather) conditions. In addition, infrared / thermal imaging systems also lack the resolution needed for object detection, characterization and classification.

Recently, surveillance using one or more video cameras placed near the runways has been proposed. Video signals obtained from the cameras are visually monitored by an operator on the console of an airport control room.

It has also been proposed to rely on image processing (e.g. background subtraction) to detect any FOD or airfield runway damage by processing video images of runways received from the surveillance cameras.

FOD or airfield runway damage detection using background subtraction has a number of problems. Firstly, the pixel properties are not always sufficient to discriminate correctly between the background and the foreground pixel. Furthermore, background is subjected to changes such as due to noise, clutter, extraneous events, variations in illumination conditions and weather conditions.

Furthermore, currently used image processing system is dependent on ambient lighting conditions and is not suitable for low lighting conditions, which causes significant problems in pixel characterization.

Video cameras used in existing surveillance systems require additional assisted illumination such as a laser light or infrared light for night surveillance. This, in turn, requires significant infrastructure in an airport using such a system, which increases cost. Also, the presence of an optical light such as a laser light or infrared light can interfere with other systems used in the airport, and may pose safety problems for navigation of aircrafts at the airport, and may pose a hazard to pilots etc.

In addition, one of the most effective tactics for an attacking force is a preemptive strike on enemy airfields. Once the runways are destroyed and aircrafts are grounded, these airfields become easier targets for further attack. This threat has been increased by the development of modern weapons designed for the destruction of runways, e.g. cluster bombs, multi rocket launchers (MRL).

Battle Damage Assessment (BDA) on a target (e.g. military airfield runway) is very important during war. Traditionally, a reconnaissance team is sent to scout the full length of the runway and chart out the damage in terms of diameter, depth, and the positions of craters with reference to the runway. A typical charting requires about 60 to 120 minutes. Such lengthy manual-based activity is inefficient in combat scenario and it inevitably exposes the men at risk of further bombardments.

Accordingly, there is a need to provide a runway surveillance and airfield damage assessment, which seek to address one or more of the above problems.

WO 20097029051 A1 discloses a surveillance system and method for detecting a foreign object, debris, or damage (FOD) on a runway. The system comprises one or more cameras for capturing images of the runway; and an image processing system for detecting the FOD on the runway based on adaptive image processing of the images captured by the cameras; wherein the surveillance system is adaptively operable for FOD detection under both day and night ambient light conditions without assisted illumination such as infrared or laser illuminators. Although WO 20097029051 A1 discloses reference to detection of different environmental conditions (e.g. day/night, rain, smoke etc) by one or more sensors, it is clear that these relate to environmental conditions that occur naturally as opposed to weapon impact, which is man-made.

Summary of the Invention

In accordance with one aspect of the present invention, there is provided a surveillance system for detecting a foreign object, debris, or damage in an airfield, the surveillance system comprising: one or more cameras for capturing images or video of the airfield; a processing unit for detecting the foreign object, debris or damage in the airfield from the images captured by the one or more cameras; and a weapons impact surveillance system for detecting weapon impact in the airfield and directing the one or more cameras to capture images in an area of the detected weapon impact.

The one or more cameras may comprise a combination of static and non-static cameras.

The one or more cameras may zoom in or focus on the area of the detected weapon impact to obtain images with details for detecting type of damage.

The weapon impact is detected by images of explosion, smoke, dust or flash or sound caused by the weapon impact.

The surveillance system may comprise a computation module for deriving a Minimum Operating Strip (MOS) for aircraft landing based on location of the foreign object, debris, or damage detected in the airfield.

The surveillance system may detect cracks, crater, camouflet, spall, UXO, or an animal in the airfield.

The processing unit may determine size of a crater, camouflet or spall by detecting amount of debris around the crater, camouflet or spall respectively.

The one or more cameras may be equipped with wide angle lens to provide wide area image capture of the airfield.

The one or more cameras may be mounted on an aircraft arranged to fly over the airfield to capture images of the airfield.

The surveillance system may comprise one or more infrared or visible spectrum illuminators for providing artificial illumination under low visibility or low ambient illumination conditions.

The processing unit may be configured for measuring size or physical attributes of the foreign object, debris, or damage.

The damage detected in the airfield may be mapped onto an airfield map.

The surveillance system may comprise a region based detector for detecting a region in the images captured that can be a foreign object, debris or damage; and an edge based detector for detecting edges of all objects in the images captured, wherein the region detected by the region based detector in the images that is overlapping with the edges detected by the edge based detector in the images are stored.

The images captured by the one or more cameras may be stitched together and areas of differences between earlier captured stitched images and later captured stitched images are highlighted in the later captured stitched images.

The weapons impact surveillance system may be configured to trigger a visual or audio alert upon detecting weapon impact.

The surveillance system may comprise a repair estimation and planning module for estimating and planning repair work based on location of the weapon impact and information of the damage.

The one or more cameras may be installed on opposite sides of a runway in the airfield and their views may be overlapped.

Views of the one or more cameras may be overlapped.

The surveillance system may comprise one or more mobile handheld devices for receiving remote alert and critical information to repair damage or remove foreign object in the airfield.

The surveillance system may comprise an image offset compensator for correcting offset between a currently captured image and a reference image taken by a camera based on position of a common object located in the currently captured image and a reference image.

The image offset compensator may use more than one common object in the currently captured image and the reference image to determine the offset to correct between the currently captured image and the reference image.

Linear regression may be used to determine the offset to correct between the currently captured image and the reference image, and an offset value calculated based on a common object in the currently captured image and the reference image is considered for linear regression if a score determined by matching the common object in the currently captured image and the reference image is greater than a predetermined threshold value.

The surveillance system may further comprise a computation module for deriving a Minimum Airfield Operating Surface (MAOS) for aircraft based on location of the foreign object, debris, or damage detected in the airfield.

The surveillance system may comprise one or more visible spectrum illuminators for providing artificial illumination under low visibility or low ambient illumination conditions.

The weapon impact may be detected by sound caused by the weapon impact.

In accordance with another aspect of the present invention, there is provided a method for detecting a foreign object, debris, or damage in an airfield, the method comprising: capturing images of the airfield; detecting the foreign object, debris or damage in the airfield from the images captured; detecting weapon impact in the airfield; and directing one or more cameras to capture images in an area of the detected weapon impact.

**Brief Description of the Drawings**

The present invention is further described by way of non-limiting embodiments, with reference to the accompanying drawings, in which:

> Figure 1A and 1B and 1C are schematic drawings illustrating arrangement of surveillance cameras in a surveillance system to detect foreign objects, debris or damages (FOD) and airfield damages on a runway and/or taxiway ;
> Figure 2 is a basic flow chart of FOD and airfield damage detection according to one embodiment;
> Figures 3A and 3B are detailed flow charts of one embodiment of the present invention;
> Figure 4 is a graph showing a lookup table used to extract edge map in Figure 3A;
> Figure 5 is a schematic drawing illustrating redundant coverage of surveillance cameras in a surveillance system to detect FOD or airfield damage on a runway and/or taxiway;
> Figure 6 is a schematic drawing illustrating a runway surface scanning according to an alternative embodiment; and
> Figure 7 is a schematic drawing illustrating runway lines according to an embodiment which makes use of runway lines for image calibration (pixel to real world co-ordinate calibration);
> Figure 8 shows a schematic drawing illustrating a computer system for implementing the method and system of the example embodiment;
> Figure 9 is a schematic drawing illustrating an integrated airfield damage assessment system comprising a system to detect foreign objects, debris or damages (FOD) and airfield runway damages, and a weapons impact surveillance system of an example embodiment;
> Figure 10 is a schematic drawing illustrating impact detection system using a weapons impact surveillance system of Figure 9;
> Figure 11 shows a layout showing the software modules used in the integrated airfield damage assessment system of Figure 9;
> Figure 12 shows a layout showing the interaction of the software modules of Figure 11 during war time;
> Figure 13 shows a layout showing the interaction of the software modules of Figure 11 during peace time; and
> Figure 14 is a schematic drawing illustrating the hardware layout of the integrated airfield damage assessment system of Figure 9.
> Figure 15 shows a stitched image of the runway with certain foreign objects debris and damage area in the runway image being highlighted.
> Figure 16 is a flowchart illustrating detection of a foreign object, debris (FOD) or damage in an airfield image using two types of detectors.
> Figure 17 is a drawing illustrating markers present in different areas of an airfield which is used for calibration of images.
> Figure 18 is a diagram for illustrating offset between a current image and a baseline image.
> Figure 19 is a diagram for illustrating offset correction between a current image and a baseline image.
> Figure 20 is a flowchart illustrating use of linear regression for airfield image offset compensation.

**Detailed Description**

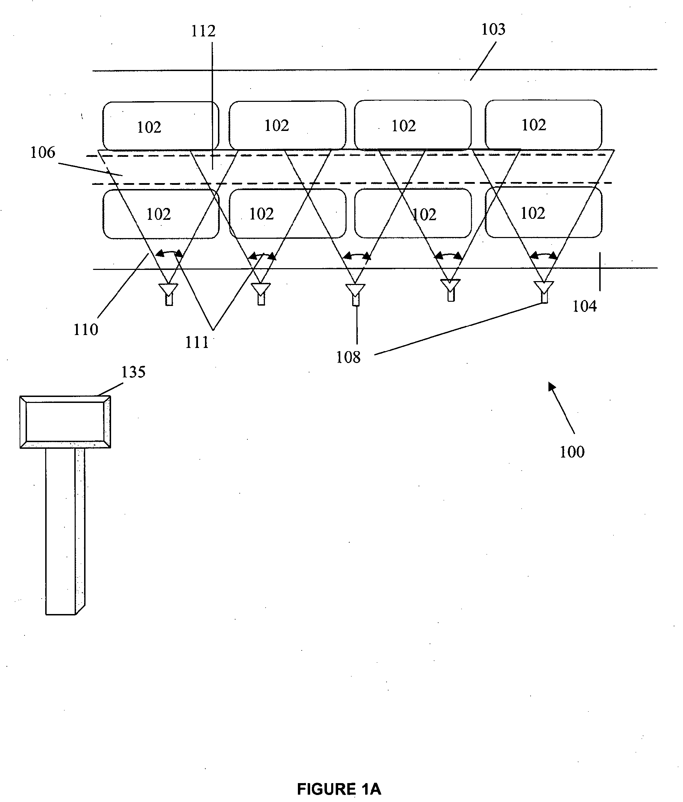

Figure 1A is a schematic drawing illustrating an arrangement of surveillance cameras in an airfield runway surveillance system 100 to detect foreign objects, debris or damages (FOD) and runway damage on a runway 106 according to an example embodiment. The runway 106 is centrally located, adjacent to taxiways 103, 104 and grass fields 102. A plurality of surveillance cameras 108 facing the runway are deployed along one edge of the taxiway 104 such that the axis of each surveillance camera 108 is perpendicular to the length of the runway 106. Each surveillance camera 108 is operable to scan a field of view 110, having a horizontal angle of view 111. Each field of view 110 includes portions from the taxiways 103, 104, runway 106 and grass fields 102. Each field of view 110 also includes intersecting portions 112 from an adjacent camera 108, along the runway 106.

The surveillance cameras 108 are positioned 150 m ~ 700 m away from the runway and create about 10~ 50% of overlapping among adjacent cameras.

Video and/or image from each of the camera 108 is feed to an application computer system (not shown) in a control tower or control room 135 of an airport. The received video and/or image is processed by a video processing unit of the application computer system. The application computer system continuously processes the video and/or image from the surveillance cameras to detect FOD and runway damage and alert the operator when a FOD or runway damage is detected. An operator in the control tower or control room 135 will also able to visually monitor the real time runway video and/or images on a video display (not shown). In case any foreign object, debris or damage (FOD) is detected when the application computer system is processing the video data, the operator is warned of it (visual and/or audible alarm and/or by remote wireless alert via mobile communication means such as GSM SMS or MMS). Upon receiving the alarm and/or remote wireless alert, the operator zooms a surveillance camera 108 onto the detected object to visually verify the FOD or runway damage. If an FOD or airfield runway damage is confirmed, an alarm (audible and/or visual) is triggered in the control tower or control room 135. The detection of a FOD or airfield runway damage also triggers a remote alarm (audible and/or visual) located near the runway 106. A wireless alert (such as GSM SMS or MMS) would also be triggered to notify the runway recovery team or the airfield repair team. Thus, immediately, a runway recovery team dispatches a recovery vehicle to clear the detected FOD i.e. remove the foreign object, debris or repair the damage.

The surveillance cameras used are passive and are not equipped with illuminators (such as laser or infrared illuminators). Each of the surveillance cameras 108 can be one of a high resolution day / night vision camera, a low lux high sensitivity colour camera, a camera with light intensifier CCDs (ICCD camera), a camera with electron-multiplier CCD (EM-CCD camera), a night vision camera, a static camera, a high resolution megapixel camera, a non-static camera (such as panning camera, pan tilt zoom (PTZ) camera or zoom camera), a Short Wave Infrared (SWIR) camera, a Medium Wave Infrared (MWIR) camera or a thermal imager. The surveillance system is thus able to operate using only passive cameras and without the need to install additional assisted illumination (such as infrared illuminators or laser illuminators).

The surveillance cameras 108 used in the system 100 are capable of generating video images or digital pictures of the runway for image processing. However, still picture digital cameras may also be used to generate digital still images of the runway for image processing.

For example, a zoom camera or Pan Tilt Zoom (PTZ) camera can be used to automatically zoom into any area on the runway to obtain a detailed view of a FOD or airfield runway damage. As the zoomed-in video images provide more details of an area of interest on the runway, an operator is in a better position to assess the potential hazard caused by the FOD or runway damage detected and to initiate appropriate action immediately. The PTZ camera or zoom camera can be remotely controlled by the application computer system to zoom into the area of interest on the runway whenever the application computer system detects a FOD or runway damage, in the example embodiment. Alternatively, the PTZ camera or zoom camera can also be controlled manually by the operator to zoom into a specific area in the airfield to obtain zoomed-in video or images.

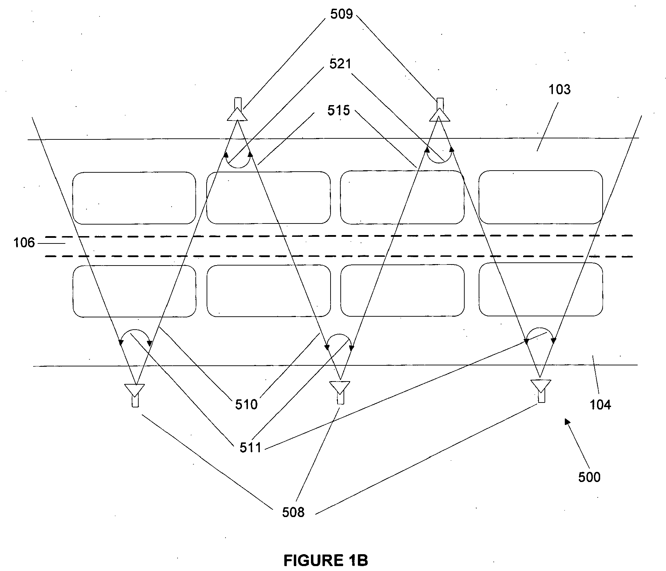

Figure 1 B is a schematic drawing illustrating an alternative arrangement of surveillance cameras in a runway surveillance system 500 to detect FOD or runway damage on a runway 106. A plurality of surveillance cameras 508 facing the runway is deployed along an edge of the taxiway 104. Another plurality of surveillance cameras 509 facing the runway is deployed along the other far end edge of the taxiway 103. The axis of each surveillance camera 508, 509 is perpendicular to the length of the runway 106. Each surveillance camera 508 is operable to surveillance a field of view 510, having a horizontal angle of view 511. Each surveillance camera 509 is operable to surveillance a field of view 515, having an horizontal angle of view 521. Each field of view 510, 515 includes portions from the taxiways 103, 104, runway 106 and the grass fields 102. The cameras 508, 509 are arranged alternatingly such that the field of view 510 and 515 of adjacent cameras alternate each other and have a clear line of demarcation or with some overlaps of coverage. The overlapping coverage (field of view) of adjacent surveillance cameras also provide some redundancy so in the event a surveillance camera fails, the adjacent surveillance cameras could also cover the field of view of the failed camera. It is also possible for the surveillance cameras to be positioned such that every sector of the runway will be covered by at least 2 surveillance cameras to provide field of view coverage redundancy. Thus at least 2 surveillance cameras could be looking at the same runway sector and the same runway damage (crater, camouflet, spall, UXO) or FOD. This will also help overcome the problem of occlusion of the airfield runway damage/FOD which could occur when only using a single surveillance camera to cover a specific runway sector or area of the airfield. Thus with this arrangement it is possible to capture 2 different views of the same runway damage (crater, camouflet, spall, UXO) or FOD as seen by 2 different cameras. This would help to improve the runway damage or FOD detection, measurement and classification rate.

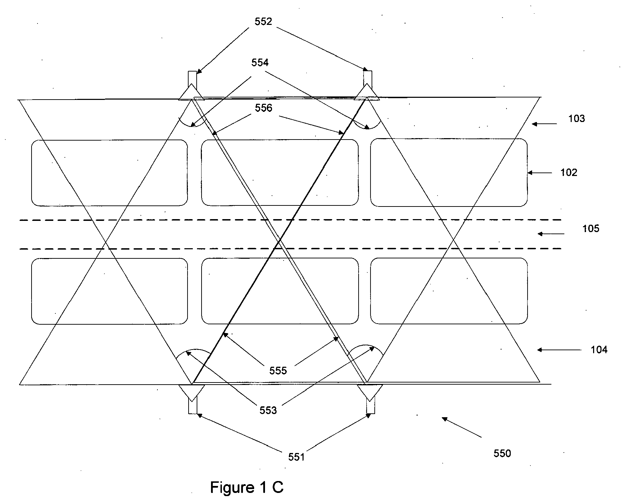

Figure 1C is a schematic drawing showing yet another alternative embodiment of surveillance cameras in a runway surveillance system 550 to detect runway damage or FOD on a runway105 . A plurality of surveillance cameras 551 facing the runway is deployed along an edge of the taxiway 104. Another plurality of surveillance cameras 552 facing the runway is deployed along the other far end edge of the taxiway 103. The axis of each surveillance camera 551, 552 is perpendicular to the length of the runway 105. Each surveillance camera 551 is operable to surveillance a field of view 555, having a horizontal angle of view 553. Each surveillance camera 552 is operable to surveillance a field of view 556, having a horizontal angle of view 554. Each field of view 555, 556 includes portions from the taxiways 103, 104, runway 105 and the grass fields (including the infields) 102. This arrangement will enable each sector of the runway and/or taxiway to be covered by at least 2 surveillance cameras, one from each side of the runway. This will provide surveillance coverage redundancy. Besides it also help overcome the problem of occlusion due to blockage of surveillance camera view for the airfield runway damage (crater, camouflet, spall, UXO) or FOD. Such occlusion could be caused by other FOD objects or runway damages lying in the camera view of a surveillance camera and could occur when only a single camera is used to cover a particular area of the airfield.

The field of view of the surveillance cameras on the opposite sides of the runway will have some overlap to provide redundancy of coverage for the runway and/or taxiway. Thus the installation of surveillance cameras on opposite side of the runway also help overcome the problem due to occlusion for the accurate detection/measurement/classification of the crater/camouflet/spall/UXO and FOD on the runway and/or taxiway.

Some portions of the description which follows are explicitly or implicitly presented in terms of algorithms and functional or symbolic representations of operations on data within a computer memory. These algorithmic descriptions and functional or symbolic representations are the means used by those skilled in the data processing arts to convey most effectively the substance of their work to others skilled in the art. An algorithm is here, and generally, conceived to be a self-consistent sequence of steps leading to a desired result. The steps are those requiring physical manipulations of physical quantities, such as electrical, magnetic or optical signals capable of being stored, transferred, combined, compared, and otherwise manipulated.

Unless specifically stated otherwise, and as apparent from the following, it will be appreciated that throughout the present specification, discussions utilizing terms such as, "calculating", "determining", "replacing", "generating", "initializing", "outputting", or the like, refer to the action and processes of a computer system, or similar electronic device, that manipulates and transforms data represented as physical quantities within the computer system into other data similarly represented as physical quantities within the computer system or other information storage, transmission or display devices.

The present specification also discloses apparatus for performing the operations of the methods. Such apparatus may be specially constructed for the required purposes, or may comprise a general purpose computer or other device selectively activated or reconfigured by a computer program stored in the computer. The algorithms and displays presented herein are not inherently related to any particular computer or other apparatus. Various general purpose machines may be used with programs in accordance with the teachings herein. Alternatively, the construction of more specialized apparatus to perform the required method steps may be appropriate. The structure of a conventional general purpose computer will appear from the description below.

In addition, the present specification also implicitly discloses a computer program, in that it would be apparent to the person skilled in the art that the individual steps of the method described herein may be put into effect by computer code. The computer program is not intended to be limited to any particular programming language and implementation thereof. It will be appreciated that a variety of programming languages and coding thereof may be used to implement the teachings of the disclosure contained herein. Moreover, the computer program is not intended to be limited to any particular control flow. There are many other variants of the computer program, which can use different control flows without departing from the spirit or scope of the invention.

Furthermore, one or more of the steps of the computer program may be performed in parallel rather than sequentially. Such a computer program may be stored on any computer readable medium. The computer readable medium may include storage devices such as magnetic or optical disks, memory chips, or other storage devices suitable for interfacing with a general purpose computer. The computer readable medium may also include a hardwired medium such as exemplified in the Internet system, or wireless medium such as exemplified in the GSM mobile telephone system. The computer program when loaded and executed on such a general-purpose computer effectively results in an apparatus that implements the steps of the preferred method.

The invention may also be implemented as hardware modules. More particular, in the hardware sense, a module is a functional hardware unit designed for use with other components or modules. For example, a module may be implemented using discrete electronic components, or it can form a portion of an entire electronic circuit such as an Application Specific Integrated Circuit (ASIC). Numerous other possibilities exist. Those skilled in the art will appreciate that the system can also be implemented as a combination of hardware and software modules.

The application computer system in the control tower or control room 135 (Figure 1A) has the following functions:

1. Configuring the surveillance system with respect to the number of cameras, coverage area (field of view) for each camera, camera calibration, events for which an alert should be generated, types of alerts etc.

2. Selecting the field of view of each surveillance camera (by remotely adjusting the camera's angle of view) in order to enable an operator to effectively confirm the FOD or runway damage, determine whether the FOD is a foreign object, debris or damage on the runway (crater, camouflet, spall, UXO), measure and classify the foreign object or airfield runway damage. The video display can show multiplexed video from a plurality of surveillance cameras.

3. Selecting the field of view (angle of view) of each pan tilt zoom (PTZ) or zoom camera by automatically adjusting each PTZ or zoom camera to pan, tilt and/or zoom into a desired area of interest on the airfield runway. The relevant PTZ or zoom camera is remotely controlled by the application computer system for automatically zooming into a portion of the airfield runway suspected to be damaged or contain debris or foreign object. This function can also be performed by the operator manually and remotely with the use of the application computer system.

4. Configuring audible or visual alerts whereby in the event a problem on the runway is registered (i.e. a FOD or runway damage detected), the system is operable to automatically generate a priority list of alerts in which the top priority is given for the largest crater or most hazardous debris, or foreign object or runway damage (crater, camouflet, spall, UXO) so as to enable the operator to take necessary corrective action according to the priority list. The alert can be configured to be an audio and/or visual or both. The alert could also include remote wireless alert via mobile communication means such as GSM SMS or MMS or 3G mobile communication.

5. Processing and recording of video images and/or still picture images captured by the various surveillance cameras in case the system detects an FOD or runway damage on a runway or taxiway and play back of the recorded video images and/or still picture images of the runway scene.

6. Management of event, video data and other data stored. All relevant data are logged in the database for easy retrieval and generation of various reports.

7. System interface in order to allow other systems to access the database.

8. System interface for sharing real time data to allow other systems to obtain real time data and system-wide status, including details of all the field equipment. Integrating real time data with aircraft landing/taking off control system is useful in providing immediate safety to the aircraft and crew.

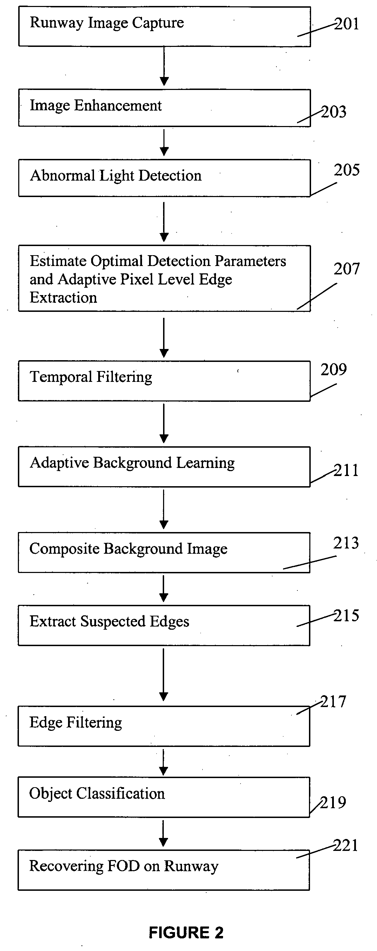

Figure 2 is a basic flow chart of FOD or airfield runway damage detection according to one embodiment.

At step 201, surveillance cameras capture respective images of a portion on a runway. The steps involved in processing the captured images are explained in the following paragraphs.

At step 203, image enhancement is performed to pre-process the captured image. The gradual grey scale change in X direction (parallel to the runway direction) and the highly contrasted runway white lines are eliminated to enhance the features that have high gradient change in the direction parallel to the runway (almost all real 3D foreign object, damages, or debris (FOD) have those properties).

All pixels in output image become almost zero (including white runway lines and regions that have grey scale gradient change due to moving cloud or raining) except some prominent runway lights and FOD. This step can assist in reliable FOD or runway damage detection with low false alarm rate.

In order to achieve optimum results, high pass filters, such as Sobel X from left_to_right plus right_to_left or Scharr X are used.

At step 205, abnormal light detection is applied for detection at night., A sudden bright light or bright spot on the runway scene can bloom the surveillance camera 108. This may happen when aircrafts land, take off or when ground vehicles move at night. The detection algorithm determines such situations. If abnormal light is detected, the images are ignored. The algorithm does a global histogram and statistical analysis (e.g. average grey scale) to compare the captured images with the progressively updated image. The algorithm also makes use of the parameters of the bright spots (such as size, area ...etc) to determine if abnormal light condition exists.

At step 207, optimal detection parameters are estimated and adaptive pixel level edge map is extracted. Under different weather and day/night condition, an image of an airfield or runway 106 may look very different. The image can be smooth or rough or with lots of reflection. This step is to adaptively estimate the optimal FOD or damage edge extraction threshold to extract real FOD or damage edges with minimum noise. The algorithm uses statistical method (e.g. mean, deviation) based on original (excluding motion area) or progressively learned background image to determine the grayscale lookup table (LUT) to be used for generating pixel level threshold map.

At step 209, temporal filtering is applied to a stack of edge maps to retain robust edges with reduced noise. Temporal filtering is applied to pixel level. Only those pixels that have accumulated to pass a certain threshold are considered as robust edge pixels (to be used in the robust edge map). Those pixels that flicker are not able to accumulate to pass the threshold and thus be deleted (not used in robust edge map).

At step 211, adaptive background learning is performed using a principle of infinite impulse response (IIR) for background learning.

$B_t$ : background image at time t,

$B_{t-1}$ : background image at time t-1,

$I_t$ : current image at time t,

Then the background image is updated by:

$$B_t = B_{t-1} * \alpha + I_t * (1 - \alpha)$$

The system primarily uses edge map for background learning. The learned features include mainly the center lights and some edge lights falling slightly inside the runway region due to low camera angle. The main objectives of the adaptive background learning is to capture a slow feature changing process on the runway in order to blend into the background, without generating false alarms, and to save the learned background edge map into file or data base on a daily basis for use as background edge map for the next day. This allows the system to adapt to runway marking changes as quickly as possible.

At step 213, composite background edge map is obtained. Composite background edge map represents the airfield runway/taxiway markings. Composite background edge map consists of adaptive background edge map, saved background edge map of the previous day and optionally seasonal markings (seasonal markings are generated during a particular season or weather condition such as snow). They can simply be added up or further processed to form the final background edges.

At step 215, suspected edges are extracted by comparing the edge map and the composite background edge map. At this step, the runway/taxiway marking edges from the processed image (composite background edge map) at step 213 are removed. The remaining edges are possibly FOD or airfield damages.

At step 217, edge filtering is performed to filter some of the edges that are not part of FOD or runway taxiway damage but may due to other weather conditions, such as snowing, raining or morning glare. Weather condition is detected through sensors and/or image processing methods. This step involves using one or more selectable algorithms to detect those weather conditions e.g. when the runway lights are switched on because of rain, reflection can arise on a runway. A specific filtering algorithm locates the light and filters the reflection edges.

Object Classification is performed at step 219 to determine if detected object from Step 217 is indeed FOD or airfield runway/taxiway damage (crater, camouflet, spall, UXO). Some examples of object classification methods are pattern matching, Bayes classifier, Linear Discriminant classifier, neural network classifier, fuzzy classifier and neural fuzzy classifier., nearest neighbor classifier. It is also possible to determine whether the airfield runway/taxiway damage is a crater or camouflet or spall and measure its size by detecting and measuring the amount of debris around the crater or camouflet or spall.

Using filtered edges from step 217, the system extracts the relevant object attributes for example length, height, perimeter, area, texture, chromatic properties (hue and saturation), luminous intensity (grey level). These object attributes forms the input vector for the object classification to determine if the detected object is indeed FOD or airfield damage.

At step 221, once a FOD or airfield runway damage is detected, an operator in the control tower or control room is warned of it either by visual and/or audible alarm and/or wireless alert (such as GSM SMS or MMS). Upon receiving the alarm and/or wireless alert, the operator zooms a surveillance camera on to the detected FOD or airfield runway/taxiway damage. If an FOD or airfield runway/taxiway damage is confirmed, another alarm (audible and/or visual) is triggered in the control tower or control room. FOD confirmation also triggers a remote alarm (audible and/or visual) located near the runways or taxiways. Additionally or alternatively a wireless alert (such as GSM SMS or MMS) could also be triggered to notify the runway recovery team. Immediately, a airfield recovery team dispatches a recovery vehicle to clear the detected FOD i.e. remove the foreign object or debris or repair the airfield runway/taxiway damage.

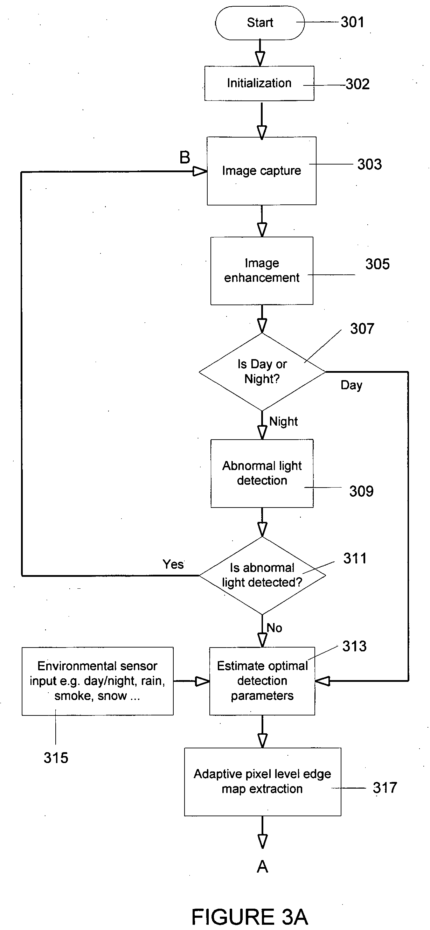

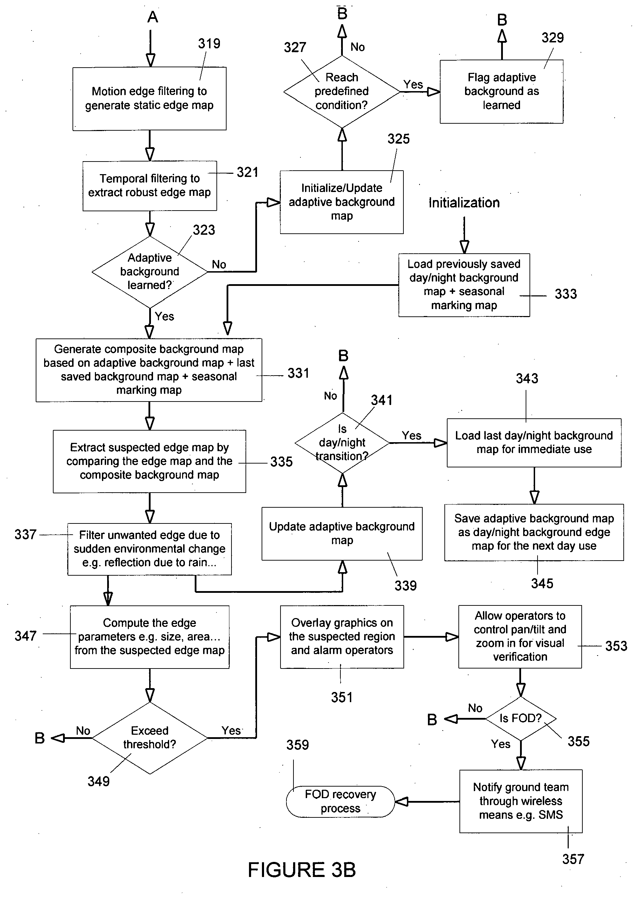

Figures 3A and 3B are detailed flow charts of one embodiment of the present invention. Upon starting the process at step 301, the system is initialized at step 302. At step 303, a surveillance camera captures an initial image of a portion of the airfield runway or taxiway.

The images are analyzed to detect any motion. Only images devoid of any motion are used for background learning and eventually stored as reference background images in a database in this example embodiment.

At step 305, the captured image is subjected to image enhancement to pre-process the captured image. After image pre-processing, all the pixels in the image become zero (including pixels corresponding to white runway lines and regions that have a change in the grey scale gradient due to a moving cloud or rain) except some prominent runway lights.

At step 307, a check is made to find if there is a day to night, or night to day transition . For example, this can be achieved by monitoring a difference in light intensity of a sensor or a camera. Light intensity changes for day to night or night to day transition is normally much greater than due to weather changes. In case a day to night, or night to day transition or nightx condition is detected, at step 309, an abnormal light detection check is performed. In case an abnormal light is detected at step 311, the previously captured image is ignored and the next image is captured from step 303. In case no abnormal light is detected, the estimated optimal foreign object, debris or damage (FOD) detection parameters are derived at step 313, for different environmental conditions (e.g. day/night, rain, snow, smoke etc) that are sensed at step 315.

For example, different environmental conditions (e.g. day/night, rain, smoke etc) can be detected by one or more sensors. The camera iris based system having a built-in one or more thresholds to make a change could also be used. For example, the threshold can be set to 50 for day and can be raised to 70 for a night. A time filter can also be used, whereby a certain value is sustained over period of time to confirm whether it is day or night. The application computer system could also use other date and time inputs including inputs from its real time clock (RTC) and electronic calendar for the confirmation of day or night condition.

The markings of an airfield runway or taxiway are different during the day and night time. Usually, there are more markings during the night. The night markings supersede the day markings.

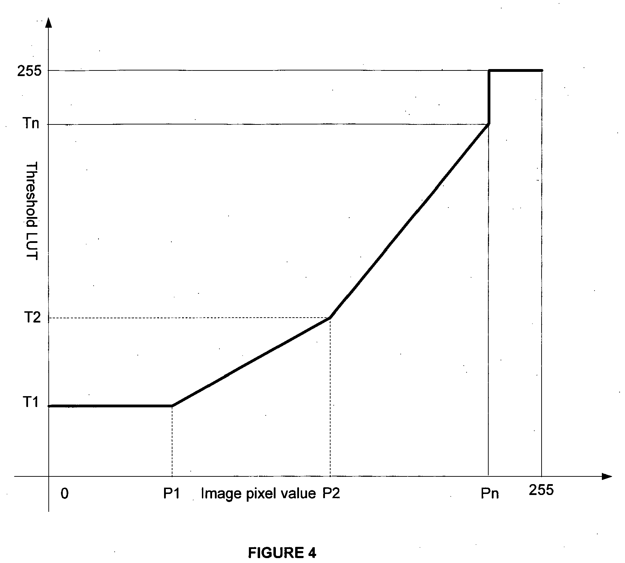

Step 317 provides adaptive pixel level edge map extraction (refer to Figure 4), wherein an optimum FOD or airfield runway/taxiway damage edge extraction threshold is derived, from a look up table (LUT), for extracting real FOD or damage edges with minimum noise.

At step 319 (Figure 3B), motion edge filtering is performed to generate a static edge map. At step 321, temporal filtering is performed to extract a robust edge map. Only those pixels that are accumulated to pass a certain threshold are considered as robust edge pixels (to be used in robust edge map). Those pixels that flicker will not be able to accumulate to pass the threshold and thus will be deleted (not used in robust edge map).

At step 323, a check is made to determine if an adaptive background is learned. The system uses edge map for background learning. If the adaptive background 323 is not learned, an adaptive background edge map is initialized/updated at step 325. At step 327, a check is made to determine if the adaptive background map reaches a predefined condition. If it has reached, at step 329, an indication is flagged to notify that the adaptive background is learned. If it has not reached, the process returns to step 303 (Figure 3A) to continue to capture images.

If adaptive background 323 is learned, at step 331 a composite background edge map is generated. The composite background map consists of adaptive background map generated/updated at step 325, previously saved day/night background map and seasonal marking map that are provided at step 333 once the processing is initialized at step 302 (Figure 3A). Seasonal markings are associated with runway markings under a particular season or weather condition (e.g. snow or rain). By processing the images or using external sensors, the system can identify those season or weather conditions to reduce false alarms. The composite background map includes the markings of the runway.

At step 335, a suspected edge map is extracted by comparing the composite background map and the edge map. At step 337, an edge filter is applied to filter any unwanted edges related to sudden environmental changes such as reflections due to rain. For example, under rainy conditions, an image of a runway light could be detected as a bright spot that may resemble a FOD or airfield runway/taxiway damage. The system is able to detect such potential false alarms by comparing with previously stored images.

After step 337, the adaptive background map is updated at step 339 and a check is made to find if there is a day to night transition, or night to day transition at step 341. If there is a day to night transition, or night to day transition, the last day or night background map is loaded for immediate use at step 343 and the adaptive background map is stored as day/night background edge map at step 345 for next day use. If there is no day to night transition, or night to day transition at step 341, the process returns to step 303 (Figure 3A) to continue to capture images.

At step 347, the edge parameters (such as size, area etc) from the filtered suspected edge map from step 337 are computed. At step 349, a check is done to determine if the edge parameters exceed the threshold. If it is so, at step 351, the suspected region on the runway is overlaid on a video display and an operator in the control tower or control room is alerted of it either by an audible signal and/or visually and/or via wireless alert (such as GSM SMS or MMS or 3G). At step 353, upon being alerted, the operator performs pan and/or tilt and/or zoom operations using the surveillance cameras for visual verification. At step 353, if the FOD or airfield runway damage is confirmed, the airfield runway recovery team is informed immediately through wireless means (such as GSM SMS or MMS or 3G) at 357. The image of the FOD or airfield runway/taxiway damage continues to appear on the video display and the alert signal persists until the recovery team recovers or clears the FOD (i.e. remove the foreign object or debris or repair the airfield runway/taxiway damage) from the airfield runway at step 359.

Figure 4 is a graph showing a lookup table (LUT) used to extract adaptive pixel level edge map at step 207 (Figure 2) and step 317 (Figure 3A) as indicated above.

$P1, P2... Pn$ and $T1, T2..Tn$ are estimates based on statistical analysis of the captured image, the progressively learned image and external sensor input so that the optimal piecewise look up table (LUT) can be computed for generating pixel level threshold, which is used to extract FOD or damage edge map with minimum noise.

The pixel value in the captured image or the progressively learned background image is mapped into a threshold value in the threshold image through the above LUT. After that, the captured image subtracts this threshold image. Any pixel value above 0 is be set to 255. This resultant image corresponds to the adaptive pixel level edge map (step 207 in Figure 2 and Step 317 in Figure 3A).

Runway scene calibration and airfield runway/taxiway damage, and FOD and damage positioning, measurement and/or classification may be performed in embodiments of the present invention.

Embodiments of the present invention also use color surveillance cameras and provide for color imaging processing.

However all the techniques and image processing methods described above work for both monochrome image processing and color image processing. Hence the runway surveillance system can use either monochrome cameras (including visible spectrum cameras, infrared cameras and thermal imagers) or color cameras.

The airfield runway/taxiway scene images acquired by the surveillance cameras in example embodiments are pre-calibrated such that the physical position and range corresponding to each pixel on the scene image is computed either using a mathematical formulae or a pre-computed lookup table which maps each pixel in the runway scene image to a specific precise co-ordinate in the 2D or 3D physical real-world co-ordinate frame (x, y, z) of the reference datum (such as WGS 84 or Airport Grid) defined on the area of surveillance such as a runway.

The system makes use of static airfield runway/taxiway features for runway scene calibration. For example the position and range of these static runway features with respect to some fixed real-world reference location can be pre-determined from ground survey, physical measurement or from the runway map. For example, one such useful feature is to place markers or use runway edge light on the runway along the longitudinal direction of the runway and the same vertical (y axis) distance from the side of the runway. Since these markers are along the longitudinal (horizontal) direction of the runway and on the same vertical distance from the side of the runway, the horizontal (x axis) distance separation of these markers can also be mapped to pixel count in the runway scene image. Thus, the horizontal (x axis) pixel mapping ratio (meter/pixel) can be derived by dividing the physical ground horizontal distance between the 2 markers by the horizontal pixel width (number of pixels between the 2 markers on the runway image). A minimum of two static runway features with known positions can be used to calibrate each scene image.

For example for more accurate scene calibration and to cater to uneven runway surfaces, a number of pairs of runway markers are preferably placed along the longitudinal direction of the runway (with the same vertical distance from the side of the runway) to mark a series of virtual horizontal lines on the runway. The ground physical distance of these horizontal virtual lines (between each pair of markers) can be measured using a measuring tape or measuring wheel or GPS receiver. The number of pixels on this horizontal virtual line for a specific camera setting is measured from the runway section image.

For example the surveillance camera's field of view on a runway has a trapezoidal shape. Therefore, the pixel mapping ratio (meter/pixel) of the runway image is different across a vertical direction (Y axis) of the runway. Thus, the far side of the runway is narrower and has a larger pixel mapping ratio (meter/pixel) while the near side is wider and has a smaller pixel mapping ratio (meter/pixel). The system makes use of two parallel horizontal runway lines on each side of the middle line and the middle line to determine the correct pixel mapping ratio (for the vertical y axis) for mapping the image pixels to the precise co-ordinates onto the real-world reference co-ordinate frame based on the datum used (which could be WGS 84, Airport Grid or Cartesian coordinate system). Thus, since the physical vertical (y axis) distance between the runway horizontal line and the middle line can be measured on the ground, the vertical pixel mapping ratio (meter/pixel) can be derived by dividing the physical vertical distance between these lines (measured on ground) by the number of pixels between these lines (derived from the vertical pixel width on the runway image).

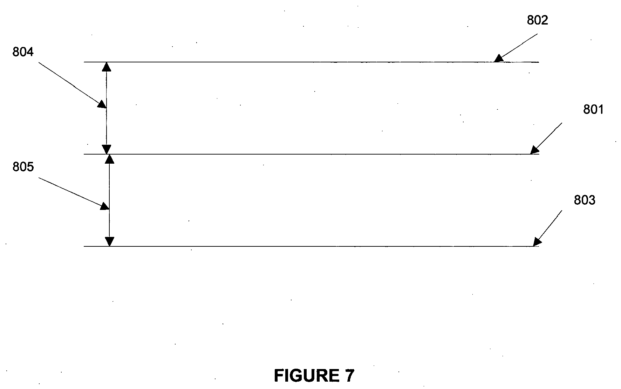

Figure 7 is a schematic drawing illustrating example runway lines according to an example embodiment. There is one horizontal runway line 802 at the far side of the runway and another horizontal runway line 803 at the near side of the runway. 802 could also be the runway edge line at the far side and 803 could also be the runway edge line at the near side of the runway. Both these lines 802, 803 are parallel to the middle line 801 and all these lines are along the horizontal direction (x axis) of the runway. The physical vertical distance between the near side horizontal line 803 and the middle line 801 is 805 and the vertical pixel width (no of pixels) between these 2 lines on the runway image is y1 pixels. Thus, the vertical pixel mapping ratio for the near side is obtained by dividing 805 by y1 (meter/pixel). Similarly, the physical vertical distance between the far side horizontal line 802 and the middle line 801 is 804 while the vertical pixel width (no of pixels) between these 2 lines on the runway image is y2 pixels. Thus, the vertical pixel mapping ratio for the far side of the runway is obtained by dividing 804 by y2 (meter/pixel). Thus, 2 different vertical (y axis) pixel mapping ratios (805/y1 and 804/y2) are used for mapping the pixels on the runway image to precise co-ordinates on the real-world reference co-ordinate frame depending on whether the pixel lies in the near side or far side of the runway using the middle line as reference.

The above technique can improve the pixel mapping accuracy. Calibration can be based on different real-world co-ordinate datum e.g. WGS84, Airport Grid or Cartesian coordinate system.

The runway edge/middle/horizontal lines can be of any color. Calibration can be done as long as a contrast exists between the runway edge/horizontal/middle lines and a runway surface. Furthermore, the runway edge and middle lines need not be continuous. Continuous lines can be derived by interpolating adjacent lines.

Alternative embodiments of the present invention can optionally or additionally make use of stereo vision using a pair of surveillance cameras to cover the same segment of the runway. When using stereo vision, airfield runway/taxiway damage or FOD range and position can also be computed from the difference image obtained by comparing the two images as captured by the two cameras covering the same area on the area of surveillance (field of view) on the runway.

Localized features are detected in each image of a stereo image pair and then matched between the images. This results in a sparse but high quality set of disparity vectors (which measure the relative positions of image features as seen in each image). From these disparity vectors, 2D and 3D estimates of the feature positions can be computed and compared with a flat (or at least a smooth) model of the runway surface. Alternatively, images can be registered at the pixel level providing a dense set of disparity vectors of more variable quality.

One of the challenges of stereo imaging is the determination of the correspondences of pixels of two images used in the range computation. The pixel correspondence techniques employed include using cross correlation operator, symbolic matching with relational constraints and combinations of these techniques.

For example, if it is required to correlate pixels between two images (Image1, Image 2) acquired by a set of stereo cameras, cross relation is based on the assumption that for a given point P1 in Image1, there is a fixed region of Image 2 in which point P2 which correspond to P1 must be found. The size of this region is determined by parameters pertaining to camera setup obtained from the camera calibration process. The symbolic matching approach to determining correspondence searches for a feature in one image that matches a feature in the other. Typical features used are junctions, line segments or regions. The correspondence of junctions produces a sparse depth map with the depth known only at small set of points. The correspondence of line segments can lead to correspondence between their endpoints.

An alternative embodiment makes use of one or more static surveillance cameras equipped with wide angle lens to provide wide area coverage of the airfield runway and/or taxiway and/or infield. The static surveillance camera will be able to detect any airfield incursion, raid or bombardment and direct the one or more pan tilt zoom (PTZ) cameras to the specific area(s) of detected damage or FOD on the airfield runway/taxiway to enable the rapid detection/measurement/classification of the runway damage (crater, camouflet, spall, UXO) and FOD.

Alternative embodiments of the present invention can also make use of an aircraft such as an unmanned aircraft or unmanned aerial vehicle (UAV) which will fly over the airfield runway/taxiway to capture aerial digital pictures or video of the airfield runway/taxiway. A Vertical Take-Off and Landing Aircraft (VTOL) could also be used which will fly over the runway and/or taxiway to capture aerial digital pictures or video of the airfield runway/taxiway. The digital pictures or video will be captured by making use of the onboard Electro-Optic Sensors (EO sensors) mounted on the UAV or VTOL. The EO Sensors can be passive and does not require the use of artificial illumination. The captured digital pictures and video captured by the EO sensors will be analysed/processed in real-time to enable detection/measurement/classification of runway damage (crater/camouflet/spall and UXO) and FOD. Under low illumination conditions such as night time, infrared (IR) artificial illumination could also be used to enhance the runway damage or FOD detection capabilities.

An alternative embodiment of the present invention will also make use of infrared (IR) illuminator or visible spectrum illuminator to provide artificial illumination under low visibility and low ambient illumination conditions (such as night time). The IR or visible spectrum illuminator would provide narrow focus beam of IR or visible spectrum light to the sector of the airfield runway/taxiway/infield being scanned by the surveillance camera(s). The IR or visible spectrum illuminator could also have pan, tilt, zoom (PTZ) capabilities. The control of the IR illuminator or visible spectrum illuminator (on/off, illumination power, PTZ) could be controlled by the Video Processor Unit (VPU) or the Central Computer System (CCS) for optimum artificial illumination under low visibility conditions.

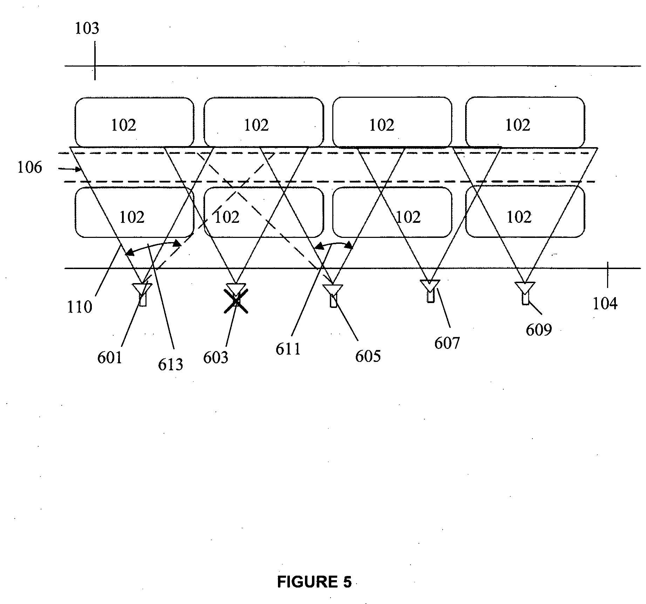

An alternative embodiment of the present invention provides for redundant coverage of surveillance cameras. Figure 5 is a schematic drawing illustrating redundant coverage of surveillance cameras in a surveillance system 600 to detect FOD or damage on a runway. The surveillance cameras 601, 603, 605, 607, 609 are positioned on one edge of a taxiway 104. In case all the surveillance cameras 601, 603, 605, 607, 609 are functioning normally, the angle of coverage (angle of view) 611 of each surveillance camera 601, 603, 605, 607, 609 usually remain equal. In case camera 603 becomes faulty and redundant, the usual angle of coverage (angle of view) 611 of each of the surveillance cameras 601 and 605 that are adjacent to the redundant camera 603 extends to 613, towards the field of view of the redundant camera 603. In this way, the airfield runway/taxiway surveillance system comprising of surveillance cameras 601, 603, 605, 607, 609 is operable to work to provide the complete coverage of the airfield runway even if one or more surveillance cameras fail to function. For example, the coverage field of view (angle of view) of a camera can be manually adjusted or performed by an operator, remotely, using the application computer system which remotely controls the camera's zoom or PTZ function. The adjustment can also be automatically performed by the application computer system. For example, a camera having a zoom function or a pan tilt zoom (PTZ) camera may be used to alter the coverage field of view (angle of view).

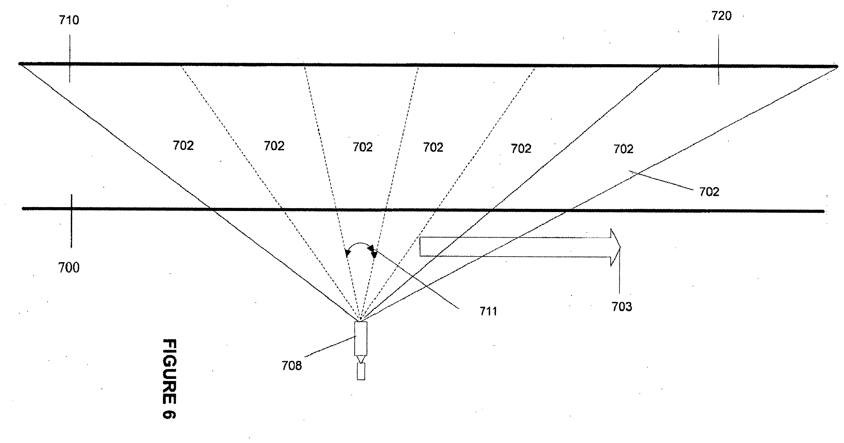

Figure 6 is a schematic drawing illustrating a runway surface scanning according to an alternative embodiment.

The runway surface area 700 under surveillance is divided into numerous segments 702 that cover small areas on the runway surface 700. The entire runway surface 700 area is scanned, segment-by-segment, using one or more non-static camera 708 that can cover a field of view having a horizontal angle of view 711. Example of non-static camera is a Pan Tilt Zoom (PTZ) camera or a zoom camera. The pan tilt zoom function of the PTZ camera or the zoom function of the zoom camera is controlled remotely by the application computer system or a camera controller. The runway surface area 700 is scanned sequentially from one end 710 to another end 720 along the longitudinal direction 703 by the use of one or more non-static camera.

Airfield Runway surface scanning according to an alternative embodiment is controlled by the application computer system or a camera controller. The challenge of this method of runway scanning is the long FOD or runway damage detection time especially when the FOD or runway damage happens to be located at the segment nearing the end of the scanning cycle. To speed up the runway scanning cycle time, an alternative method is to skip one or even two segments i.e. scan one segment for every two or even three segments. During the next scanning cycle, the previously unscanned segments are scanned, while those scanned during the previous cycle are not scanned in this cycle. The trade-off in runway scanning method is the long detection time to detect FOD that happen to lie at the unscanned segments on the runway surface.

Since FOD on the runway are mainly caused by aircraft take off and landing, another method to reduce the FOD detection time in alternative embodiment is to make use of a combination of non-static or static surveillance cameras. The static camera preferably has adequately wide field of view (wide angle of view) to cover a significant section of the runway and/or taxiway. By processing the images captured by the static surveillance camera in real-time, the application computer system can detect the occurrence and location of air craft take off and landing on the runway. Then the non-static surveillance camera can be directed by the application computer system to first scan those segments covering specific locations on the runway where the aircraft landing or take-off has just occurred. This method can help in reducing FOD detection time.

If the static surveillance camera detects an FOD or airfield runway damage, the application computer system in a control tower or control room determines the position and range of the detected FOD or runway damage on the runway based on scene images captured by the static camera. The determination of the position and range of the detected FOD or airfield runway/taxiway damage on the airfield runway/taxiway surface is achieved by using monoscopic vision with calibrated scene image of the runway. For example in the calibrated runway scene image each pixel is mapped onto precise co-ordinate on the real-world co-ordinate frame (which could be based on WGS 84 or Airport Grid datum). Alternatively stereoscopic vision based object positioning and ranging techniques could also be used.

The information regarding the range and location of FOD or airfield runway/taxiway damage as detected by the static surveillance camera (monoscopic or stereoscopic) is utilized by the system to automatically control the non-static cameras (for example, a panning camera or a pan tilt zoom (PTZ) camera or a zoom camera) to pan and/or tilt and/or zoom and/or focus on to an FOD or airfield runway/taxiway damage or area of interest on the airfield runway/taxiway and to obtain telephoto images on a video display of the FOD or area of interest or airfield runway/taxiway damage with sufficient details to confirm the presence of detected FOD or airfield runway/taxiway damage or to filter a false alarm. These telephoto images are also utilized for accurate measurement, characterization and classification of the detected FOD or airfield runway/taxiway damage. Accurate object features including object length, height, area, curvature, perimeter, texture, chromatic properties can extracted from these telephoto images, which can be used as inputs to a pre-trained object classifier.

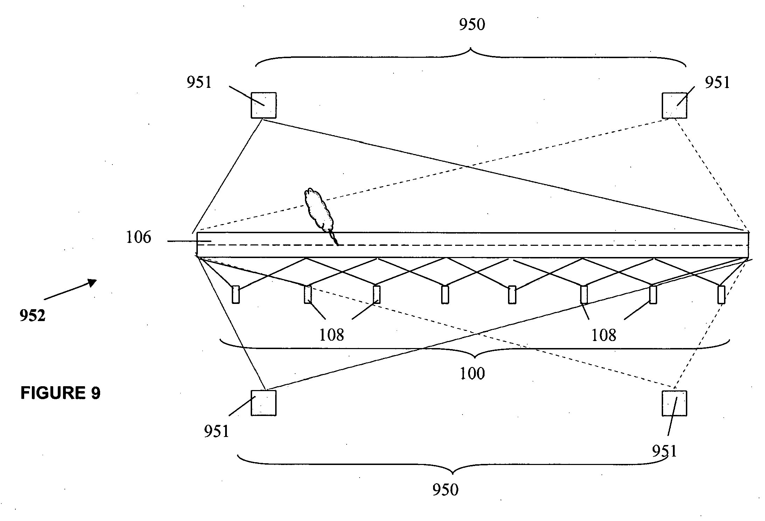

Embodiments of the present invention can also be extended to be used as an integrated airfield and runway taxiway damage assessment system comprising the system 100 (Figure 9) to detect/measure/classify foreign objects, debris or damages (FOD), taxiway or runway damages and a Weapons Impact Surveillance System.

Figure 9 is a schematic drawing illustrating an integrated airfield damage assessment system 952 comprising a system 100 to detect foreign objects, debris or damages (FOD), airfield runway/taxiway damages and a weapons impact surveillance system 950 according to an example embodiment.

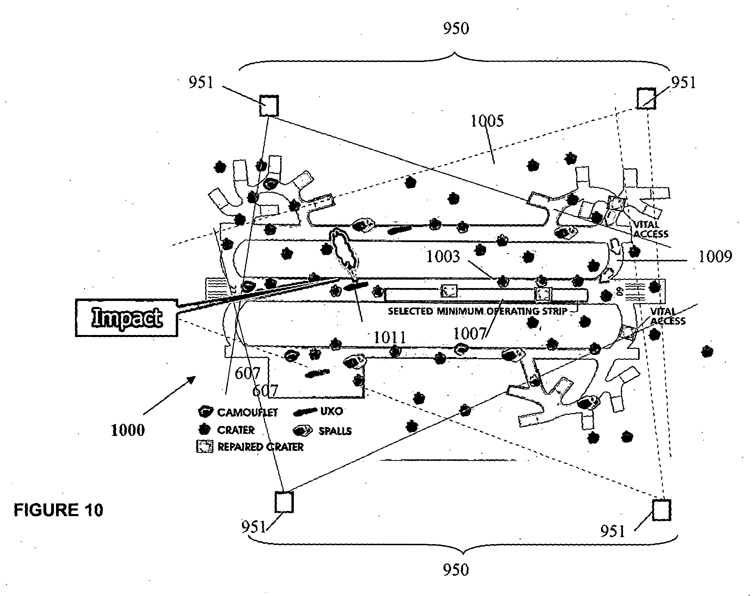

Figure 10 is a schematic drawing illustrating impact detection system using a weapons impact surveillance system of Figure 9

Following an enemy attack on an airfield, firstly, all the damages e.g. 1003 are detected and the information is plotted onto an airfield plan 1000 using video or image data from the static cameras 951 of the weapons impact surveillance system as input. A Minimum Airfield Operating Surface (MAOS) and/or a Minimum Operating Strip (MOS) 1007 is then derived depending on the type of aircraft, payload and ambient conditions, and the least amount of initial repair work needed to restart flying operations. In establishing the MAOS and MOS 1007, consideration is given to one or more, preferably all of the size and location of craters 1003; ease of access to the location of craters 1003; ease of access for aircraft to the MOS 907 via damaged taxiways or access routes 1009; and the location of unexploded bombs (UXO) or craters e.g. 1011.

Embodiments of the present invention utilise intelligent video/image processing which can advantageously provide:

- Real-time, automated detection of airfield runway/taxiway damages (craters, camouflet, UXO, spalls) and FODs;
- Visual verification and precise location of the airfield runway/taxiway damage items (craters; camouflet, UXO, spalls) and FODs
- Measurement of size/physical attributes of the airfield runway/taxiway damage (crater, camouflet, UXO, spall) and FOD; and

- Mapping the extent of airfield damage or airfield runway damage onto an airfield map or an airfield runway map.

The collective information derived from an intelligent video/image processing-based system preferably offers an effective decision support system.

The computer vision based weapons impact surveillance system 950 automatically detects and scores the impact of rockets and bombs to facilitate realistic weapons training and defense exercises for air, sea and land forces. The surveillance system 950 is capable of scoring single or multiple hits over land and on water in both day and night operations. Designed with an open architecture, the weapons impact surveillance system 950 can be integrated with Air Combat Maneuvering Instrumentation (ACMI) to become one of the subsystems of Electronic Warfare Training System (EWTS).

Embodiments of the advanced battle damage assessment (BDA) system 950 are preferably implemented based on:

- technology experience in intelligent video/image processing;
- adaptation of field-proven, computer vision-based systems in the military and/or airfield environment;
- reliability and robustness in system design, hardware and software which can be integrated into an air-force
- economic viability in terms of optimizing the return of investment in war time as well as in peace time.

Embodiments of the present invention provide an advanced automated BDA System 950 through the integration of the weapons impact surveillance system 950 (Figure 9) and the airfield runway/taxiway damage and FOD detection system 100 (Figure 9).

The weapons impact surveillance system 1000 (Figure 10) has the ability to automatically and accurately detect and plot single or multiple visible weapons impact(s) from a wide or normal or narrow angle view of the airfield area. The types of weapons impact signature include those from air-to-ground and ground-to-ground missiles, rockets, bombs and artillery rounds that usually generate visible impact such as explosion, smoke, dust or some form of flash (at night). It is possible that the weapons impact surveillance system 1000 may also make use of sound created by the weapon impacts to locate the location of the weapon impact. This could be achieved by having microphones placed at strategic locations and using audio source tracking techniques.

On the other hand, the airfield runway/taxiway damage and FOD detection system 100 (Figure 9) is advantageously designed with a zoom-in view preprogrammed to scan, search and detect very small objects (e.g. 4cm size FOD), UXO, airfield runway/taxiway damages (crater, camouflet, spall) and pavement condition (e.g. cracks) in the airfield runway/taxiway/apron environment. Operating 24 hours, the FOD detection system 100 (Figure 9) with the specialized electro-optic (EO) sensors integrates with image processing and enhancing software technology to enable the system to "see" and detect very small objects even during night operations. The airfield runway/taxiway damage and FOD detection system 100 (Figure 9) monitors and inspects the airfield's designated pavements remotely from a safe distance and pin-points the location of the detected target.

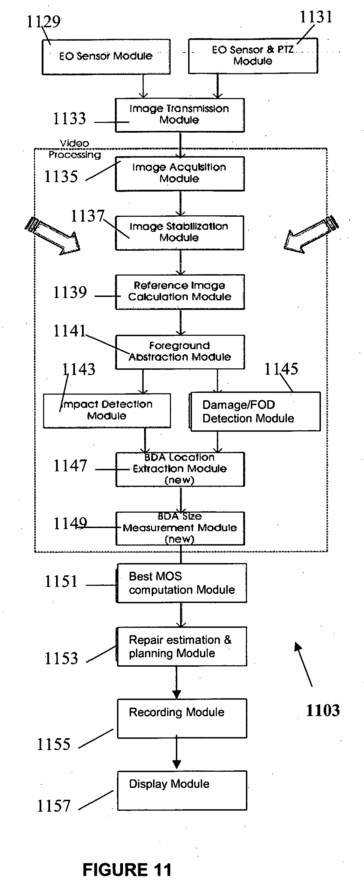

Figure 11 shows a layout showing the software modules used in the integrated airfield damage assessment system 952 of Figure 9. Using multiple software techniques that are robust to the changing environmental airfield conditions, the BDA software is able to self-learn and adapt to the changing scene to distinguish the signature of a bombardment (crater. camouflet, spall) or UXO or FOD from possible false alerts. The detection algorithm extracts relevant attributes of the target, such as length, height, depth, perimeter, area, texture, curvature, chromatic properties (hue and saturation), luminous intensity (grey level), etc. to determine and measure the target. Some of the techniques employed in example embodiments include:

- Intelligent video analysis based on dynamic background modeling and scene change detection techniques. Even tire marks on the runway are constantly updated to the background scene for positive detection;
- Noise filtering process to reduce (attenuate) the noise components of the video or image due to the effects of weather changes, heat waves, etc.;
- Image aggregation techniques to produce the best quality image under low light/visibility condition for analysis/processing;
- Static target detection to differentiate static target from legitimate moving objects, such as aircraft, vehicle, human, wildlife, etc. on the airfield runway/taxiway; and
- Artificial intelligence technologies applied for continuous self-learning and adaptation to scene changes, such as environmental changes from day to night, overcastting shadows and rain, snow.

At the same time, concurrent image processing is performed from separate dedicated sensors:

- Processing from input of the sensors 951 (Figure 9) used for weapons impact surveillance and scoring - the algorithm first analyzes the designated wide area field of view of the runway/taxiway to detect and differentiate actual identifiable weapons impact signature from other background effects. Upon detection, the software will trigger a visual and audio alert and command the pan-tilt-zoom function of the FOD sensor 108 (Figure 9) to acquire detailed image or video at the specific location at the point of impact. The FOD and damage detection algorithm will search, detect and measure the extent of damage; and

- Processing from input of FOD sensors - the algorithm is pre-programmed to scan and analyze the designated zoom-in view of the airfield runway or taxiway pavements sector by sector to detect crater, camouflet, spall or UXO. Upon detection, the software captures the image or video, computes the precise location, and triggers a visual and audio alert to the user before continuing with the inspection of the next sector of the runway or taxiway.

Through pixel-level image resolution, the BDA software is capable of locating the crater, camouflet, spall or UXO or FOD with a position accuracy of preferably ±1m (3.28ft), and of measuring the crater/camouflet/spall/UXO/FOD size/dimensions.

Thereafter, the software can capture a snapshot of the detected crater, camouflet, spall or UXO or FOD 1003 (Figure 10), indicate the date and time of the occurrence, the coordinates and size of the crater/camouflet/spall/UXO/FOD target 1003 (Figure 10), and plot and display the detection on a 2-dimensional (2-D) Graphical Information System (GIS) map 1000 (Figure 10).

In addition, real-time video images from all the sensors 951 and 108 (Figure 9) are available for the user to assess the extent of battle damage, runway and taxiway conditions as well as pavement conditions.

With reference to Figure 11, the BDA System module 1103 integrates the weapons impact surveillance system module and FOD detection module. This is possible because of open standard modular design in the example embodiments, which advantageously results in ease of scalability, maintainability, customization and troubleshooting.
The major modules in an example embodiment are:

- EO Sensor (EOS) Module 1129 of the weapon impact surveillance system capturing video or images of a target area of the airfield.
- EO Sensor (EOS) and Pan-Tilt-Zoom (PTZ) Module 1131 of the airfield surveillance system (for FOD and damage detection) for commanding the PTZ level of the FOD and damage detection system to scan (pan/tilt/zoom) a specific target area on the airfield.
- Image Transmission Module 1133 for transmitting images from the EO Sensors and PTZ sensors to the VPU (wired/wirelessly).
- Image Acquisition Module 1135 to check, correct and fine-time the quality of the image and frame rate.
- Image Stabilization Module 1137 to detect the reference markers in every frame and stabilize/restore the image back to its original position when sensor vibration is encountered.
- Reference Image Calculation Module 1139 to create and update the reference background image in every frame, which will be used in the foreground abstraction module.

- Foreground Abstraction Module 1141 for subtracting the current frame from the reference background image for detection of significant change in the image pixels.
- Impact Detection Module 1143 to identify the significant changes detected based on the patterns found in several successive frames upon detection of a weapons impact.
- FOD Detection Module 1145 to identify the significant changes detected based on the various attributes upon detection of an object (such FOD or airfield damage).
- BDA Location Extraction Module 1147 to extract the location of the FOD or damage detected (including location of crater, camouflet, spall, UXO).
- BDA Size Measurement Module 1149 to measure the physical dimensions of the FOD or damage (including crater, camouflet, spall, UXO).
- Best MAOS and MOS computation module 1151 to compute the best (optimum) MAOS and MOS.
- Repair estimation and planning module 1153, to estimate and plan required repair work, including estimating and planning required repair work for the best MOS and/or MAOS.
- Recording Module 1155 to allow recording and playback of video footages for investigation/analysis.
- Display Module 1157 to display the video or image and computed airfield damage data on a graphical user interface.

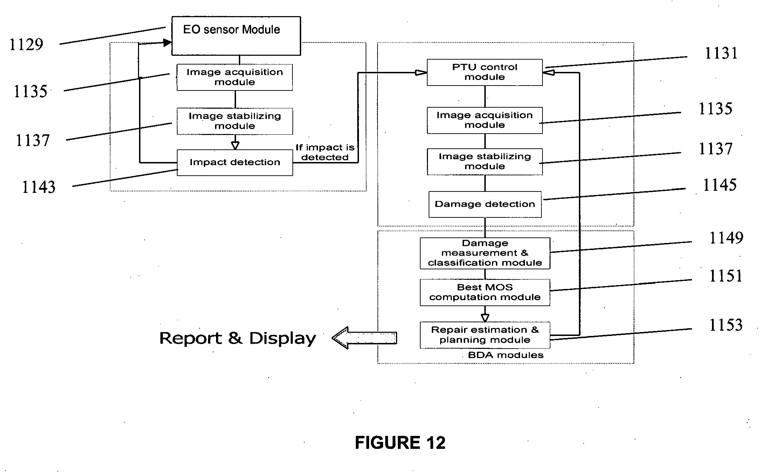

Figure 12 shows a layout showing the interaction of the software modules of Figure 11 during war time. Embodiments of the BDA system 952 (Figure 9) of the present invention can provide the following advantages during war time:

The BDA System 952 (Figure 9) provides a 24 hour detection of the airfield bombardment, and locates and measures the craters, camouflet, spall, UXO and FOD during war time. The timely and accurate assessment of damage on the airfield/runway inflicted during military operation is critical during war time. By providing information on the extent of physical damage done to the airfield (including runway and taxiway), it advantageously facilitates the re-planning of aircraft takeoff and landing, and prioritization of airfield runway/taxiway repair.

Through pixel-level analysis, the BDA System 952 (Figure 9) automatically detects the bombardment, locates the position, and measures the crater, camouflet, spall, UXO, FOD size accurately. Based on this information, the user (such as airfield commander) can assess and decide on the amount of resources, time and materials required to repair the airfield runway/taxiway damages in the fastest manner.

Furthermore, the BDA System 952 (Figure 9) can provide mapping on the extent of airfield damages.

By automatic analysis of the crater size and location information, the system 952 maps the extent of the airfield damages on the 2D airfield map, and intelligently supports the user in determining the operating conditions of the entire airfield runway/taxiway including:

a. the quantities, locations and sizes of craters, camouflet, spall, UXO, FOD on the runway;
b. the locations/"strip" of the runway which is serviceable for aircraft take off/landing operations;
c. the locations/"strip" of runway which is damaged and requires repair work; and
d. the recommended Minimum Airfield Operating Surface (MAOS) and Minimum Operating Strip (MOS) based on aircraft types and squadron locations.

The BDA System 952 (Figure 9) is a "passive" system that is safe to operate in all airfield environments without any hazard/interference to both ground and air systems. It is totally non-intrusive, has zero active emission, and is not supported by any active light source. It poses no health hazard to human or operational interference to any existing equipment or future system implementation on ground and in aircrafts. Unlike an "active" system, the proposed "passive technology" is especially crucial for military air bases during war because it avoids attacks from High-speed Anti-Radiation Missile (HARM).

Embodiments of the BDA system can be designed and built to operate under all weather conditions, 24 hours to protect the airfield, runway and taxiway. Embodiments of the BDA system 950 (Figure 9) have been field-proven to "see" and detect very small objects (FOD) and runway taxiway damages (crater, camouflet, spall, UXO) during both day and night operations. Embodiments of the BDA system advantageously perform under extreme weather conditions of haze (air pollution index 120; visibility 200 meters) and heavy rainfall (28mm/hr).

Embodiments of the BDA system can be designed for redundancy with partial or comprehensive overlapping coverage to increase the survivability of the system during war time.

To provide redundancy, the FOD or damage detection sensors 508 and 509 (Figure 1 B) are installed a few hundred meters apart and on opposite sides of the runway; and in the event of any sensor failure, the adjacent and/or opposite sensors continue to provide coverage for the "lost" sector that is supposed to be monitored by the failed sensor.

In addition, the backend system includes redundant server(s) to reduce the unplanned down time to the minimal. Critical spares are proposed to enable timely replacement of faulty components.

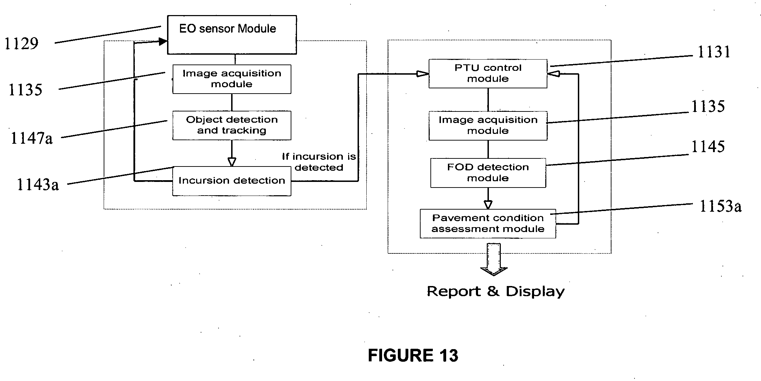

Figure 13 shows a layout showing the interaction of the software modules of Figure 11 during peace time. Embodiments of the BDA system of the present invention can provide the following advantages during peace time:

In addition to scanning/searching for crater/UXO measurement on the airfield runway, the FOD EO sensors 108 (Figure 9) are also capable of detecting other FODs and runway/taxiway damages (such as camouflets and spalls). This helps to automate FOD and runway damage detection on a real-time basis to enhance situational awareness and operational readiness of the airbase. The built-in artificial intelligence technologies ensures objective, positive identification of FODs and runway/taxiway damage so that human-related error or complacency is avoided.

The adoption of FOD EO Sensors allows an operator to see clearly in ultra low light airfield environment. Some of the scenarios where FOD EO Sensors can contribute in airfield surveillance are:

Critical Surveillance Situations

- Airfield runway/taxiway incursion/excursion
- Airfield, runway and/or taxiway damage assessment
- Airfield runway and/or taxiway damage (crater, camouflet, spall, UX) and FOD detection/measurement/classification
- Wingtip collision
- Aircraft breakdown
- Emergency/Crash landing
- General Surveillance Situations
- General airside surveillance
- Monitoring runway surface condition
- Enforcement of safety compliant in the airfield (e.g. aircraft towing, paving or
- construction works, etc.)

Runway/Taxiway Surface/Pavement Condition Monitoring

Like all other airport systems, runways and taxiways are subjected to ageing due to environmental factors over the years. Areas of stone loss are commonly found during the infrequent and time-consuming manual inspection. Certain parts of the runway or taxiway, especially the aircraft takeoff and landing areas, are commonly distressed with significant stripping of chunks of asphalt/concrete.

Since the FOD EO sensors continuously inspect the runway and/or taxiway and capture very high resolution, zoomed-in images of the runway and/or taxiway surface and, as such, advantageously provide capability of scrutinizing the surface condition to detect debris, significant cracks or damages of the runway or taxiway.

For example, bird strikes incidents can happen on ground level. A number of varieties of birds are usually found throughout the year, and typically an increase in bird activities during the migratory months. Embodiments of the present invention can be effective in detecting the presence of birds on the runway and/or taxiway, providing an effective decision support system to help the airfield operator in preventing bird strike incidents on ground.

Runway safety in example embodiments preferably also takes into account issues such as animals straying on the runway. Using intelligent vision technology, example embodiments are preferably capable of spotting snakes, tortoises, monitor lizards and other wildlife on the runways and/or taxiway. For aircraft safety, the ability to detect wildlife on the runway and/or taxiway can prompt the airfield operator to close the runway and/or taxiway and dispatch ground crews to catch and remove the wildlife hazard from the runway.

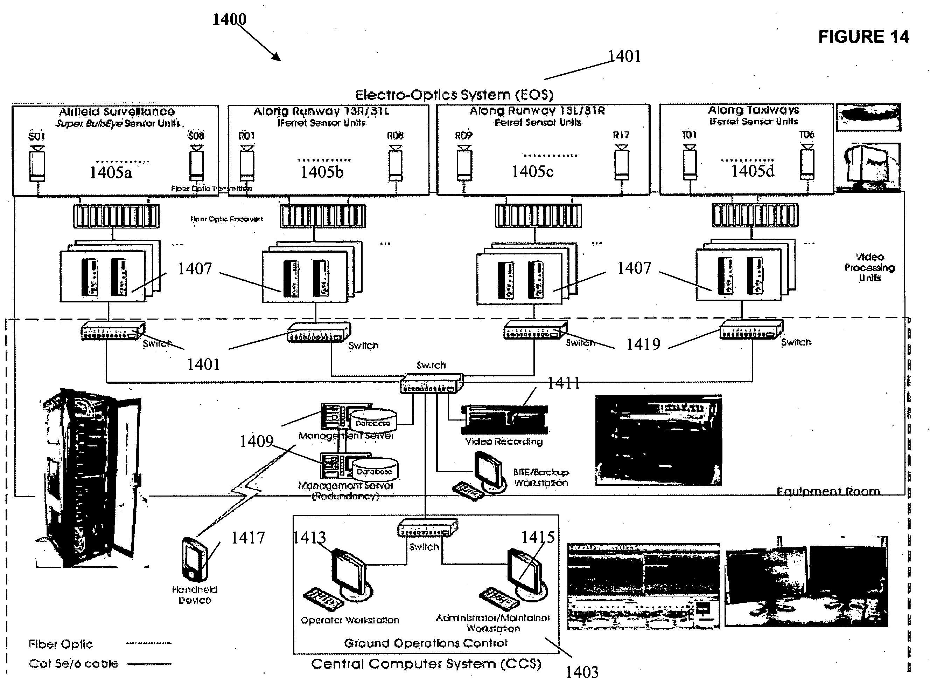

Figure 14 shows a schematic drawing illustrating the hardware system 1400 layout of the integrated airfield damage assessment system according to an example embodiment.

The hardware system 1400 (Figure 14) of the integrated BDA comprises an electro-optic (EO) system 1401 and a central computer system (CCS) which comprise of 1403 and 1409.

The EO System 1401 (Figure 14) consists of a series of EO Sensor units (cameras) 1405 a - d and their respective dedicated video processing units (VPU) 1407. The EO Sensor (camera) 1405a are mounted on a tower or building structure to inspect and capture live video or images of the target area of the airfield. The automatic surveillance system in one embodiment uses a mega-pixel static EO sensors with a wide field of view to cover up to 700m (2,297ft) length of the runway/taxiway. The FOD system (EO sensor units 1405 b - d) in one embodiment apply pan/tilt/zoom (PTZ) ultra-low-lux EO sensors with high clarity zoom lens to survey/scrutinize the runway/taxiway sector subsector by subsector. Every subsector is about 5.5m (18ft), and each of the PTZ EO sensor pans to cover up to 350m (1,148ft) length of the runway/taxiway. Each VPU 1407 is dedicated to process video images from an EO Sensor unit. Through an optical transceiver, this video is streamed to the VPU for image processing. The output of the VPU 1407 transmits both image or video and data to the Central Computer System (CCS) Management Servers 1409.

For robustness, the BDA system 1400 (Figure 14) provides two levels of redundancy design mechanism, front-end and backend built-in redundancy, to ensure high availability of system operations. FOD and damage detection EO sensors 108 (Figure 9) and weapon impact surveillance EO 951 (Figure 9) are installed on one side of the runway, and all of them are at least 300m (984ft) away from the runway centerline. In the event that the weapon impact surveillance sensors 951 are hit by bombardment, the FOD and damage detection sensors 108 can continue to function to search, detect and measure the FOD or damage (such as crater/UXO). Likewise, if FOD and damage detection sensors are hit, the weapons impact detection 951 are also capable of detecting and locating the airfield runway/taxiway damages.

As the system 1400 also takes into consideration any EO sensor malfunction and provide for redundancy, there is sufficient overlapping coverage of the EO sensors and so that the adjacent EO sensors will provide backup coverage for the defective EO sensor. The backend redundancy prevents management server failure. That is, the management servers are designed and deployed in (at least) a pair for redundancy. To ensure high availability, the redundancy server shall automatically take over in the event that the primary server fails.

The central computer system (CCS) consists of the management servers (with redundancy) 1409, digital video recorder (DVR) 1411, operator workstation 1413, administrator/maintainer workstation 1415, and mobile handheld device 1417 in one example embodiment.

The management server 1409 is the central database for system operations including user access control, system configuration, alert configuration, images and associated information management, data query, and report generation. The redundant server takes over this function in the event that the management server fails. DVR 1411 provides continuous real time digital video recording of the images from all the sensor units. In one embodiment, DVD 1411 is sized for 30 days storage, and the video can be archived to DVD, if required. This facility enables video playback for analysis and investigation.

The operator workstation 1413 serves as the main user interface to log-in, monitor and operate the system 1400. The administrator/maintainer workstation 1415 is primarily used for technical support to conduct health check and troubleshooting on the network and equipments. It can also function as a backup for operations in the event that the operator workstation 1413 is malfunctions.

Mobile handheld devices 1417 are issued to the ground support crew to enable them to receive remote alert and critical information (date/time, location, size of damage, image, etc.) before and/or during the crew being mobilized to repair the crater or remove the debris from the runway/taxiway. This information prepares the ground crew to respond with sufficient resources and materials and rapidly locate the target.

The Electro-Optics System 1401 at the front-end comprises of EO Sensors 1405 a - d and VPUs 1407. All the EO Sensors 1405 a - d along the runway/taxiway are powered for continuous operations, and connected to the backend equipment room via fiber optics link. Each sensor 1407 is connected by fiber link to its dedicated VPU 1407, and video-split to the DVR 1411 for recording.

The backend equipment consists of management servers 1409, DVR 1411, switches 1419 and operator/administrator workstations 1413, 1415. The workstations 1413, 1415 are preferably located at the Ground Operations Control Center or Airfield Command Post. The system 1400 can also leverage on the existing LAN network using TCP/IP communication protocol, where available. The video will be processed by the VPU 1407 and, upon e.g. crater detection, transmit an image with the associated data to the management (redundant) servers 1409. The management server stores the alert status, locate and measure the crater size, and present the data on the operator workstation 1413. When a user selects manual (live) view, real-time video will be streamed from the selected sensor. For investigation purpose, the user can download stored records from the DVR to playback the video for analysis for example one handheld mobile device 1417 per runway can be supplied to the ground crew.

Upon user confirmation of the target and initiating the airfield runway/taxiway repair, the handheld device 1417 will receive the critical information including image to prepare the ground crew for airfield runway/taxiway recovery or repair.

Embodiments of the BDA system are preferably capable of detecting the following Crater Sizes:

- Small Crater: 10cm to 1.5m from small rocket, cannon fire, contact-fused ordnance
- Mid-size Crater: 1.5m to 6m from clustered ordnance, large rocket, small concrete penetrator
- Large Crater: > 6m from delayed fused ordnance, large concrete penetrator Besides craters, the BDA system is also capable of detecting and measuring camouflets, spalls, UXOs and FOD on the runway and taxiway

The operational workflow of the BDA system in one embodiment is explained below:

a) Video or images from dedicated static EO Sensor unit 1405 a is automatically captured and processed in real-time to provide positive identification of weapons impact, and video from dedicated panning EO Sensor unit 1405 b -d is automatically captured and processed in real-time to provide positive identification of damage/UXO/FOD detected;

b) Video and alerts are displayed at the Ground Operations Control Centre or Command Post in a single view for complete assessment of the runway/taxiway;

c) For any bombardment, crater, camouflet, spall, UXO or FOD detected are automatically highlighted and alerted at the operator workstation. Upon detection of a weapons impact by the static EO Sensor 1405a, the panning EO Sensor 1405 b - d will be directed to the location to perform zoom-in measurement of the FOD or airfield damage.

d) A computer-assisted zoom image of the detected target, as well as the associated location and size information, will be displayed at the operator workstation for visual verification.

e) Based on the aircraft types and squadron locations, the system will recommend the Minimum Airfield Operating Surface (MAOS) and Minimum Operating Strip (MOS) for priority repair.

f) Upon confirmation by the user, remote alert via wireless means through the GSM or 3G mobile communication network will be sent to the handheld device in possession by the ground support or repair crew. The handheld device provides information such as date/time, crater/camouflet/spall/UXO/FOD location(s), crater/camouflet/spall/UXO/FOD size(s), class and priority for repair;

g) The user halts aircraft takeoff and landing, and dispatches ground crew to repair the crater/camouflet/spall or remove the UXO/FOD from the runway/taxiway; and

h) Once repair/removal is completed and runway resumed operation, video, image and alert records can be retrieved for report generation and post incident analysis/investigation.

Under the International Civil Aviation Organization (ICAO) and the Federal Aviation Administration (FAA) regulatory standards, only critical navigation equipment is allowed to be installed within 150m (492ft) from the runway centerline and all other essential installations must follow the 1:7 height limitations beyond the 492ft mark. Embodiments of BDA system of the present invention preferably comply with ICAO, FAA and other air force standards.

Embodiments of the present invention as described herein before can also provide filtering out background clutter due to rain. Typically, rain clutter does not only occur only in localized area on the runway or taxiway, but also across the entire runway. Rain can also cause motion clutter in the runway scene image with specific characteristics such as splashes when the rain hits the runway surface. Thus, one method to filter away rain clutter is to detect and recognize motion clutter in the runway or taxiway scene with rain-like characteristics that occur across the entire runway. Since rain clutter is not static and varies between frames, temporal filtering could also be used to filter rain clutter. Thus motion clutter with rain like characteristics which occur across the entire runway or taxiway will be filtered out as rain clutter. The above principle can also be applied to filter background clutter due to snow in alternative embodiment. Thus motion clutter with snow like characteristics which occur across the entire runway will be filtered out as snow clutter using temporal filtering.

In example embodiments of the present invention, reference background images obtained from the surveillance cameras are pre-processed using edge detection techniques to make the system more resilient to illumination changes, clutter and to reduce false alarms

Edge enhancement and detection techniques are used to identify edges of runway or taxiway features. An edge in an image is a contour across which the pixel properties change abruptly. Edge enhancement and detection is used to improve resilience to illumination changes for foreground pixel identification based on background subtraction and/or learning.

Embodiments of the present invention described above can have one or more of the following features:

- image enhancement of a runway image by using high pass filters (such as Sobel X from left_to_right plus right_to_left or Scharr X) to enhance features that have high gradient change in the direction parallel to the runway
- Optimal estimation of FOD or damage edge extraction threshold. The estimation adapts to different environmental conditions (e.g. rain, light reflection, night time etc...) and make use of statistical methods based on progressively learned background edge map to determine the grayscale lookup table (LUT) to be used to generate pixel level threshold map for adaptive pixel level edge map extraction
- Temporal filtering applied to pixel level to retain robust edge by using a stack of edge maps to reduce the noise. Only pixels exceeding threshold will be classified as robust edge pixels and the remaining pixels will not be used for the edge map.
- Adaptive background learning which compares current edge image with background image at previous instants to capture the slow feature changing process on the runway or taxiway to allow these features to blend into the background without generating false alarm.
- Composite background edge map which consist of adaptive background edge map and the previously learned background map and optionally seasonal markings (generated for particular season or weather condition such as snow).
- Generation of suspected edge map by comparing the edge map and the composite background map
- Edge filtering to filter some of the edges that could be due to sudden environmental changes e.g. reflection due to rain or other weather conditions..
- FOD or airfield runway/taxiway damage detection on a runway with abnormal light detection during night time (such as due to aircraft landing, aircraft taking off, ground vehicle movement etc...) by using global histogram and statistical analysis to compare with progressively updated image to determine the abnormal light condition.
- day/night surveillance for detecting FOD or airfield runway/taxiway damage on a runway or taxiway without the need for installation of assisted illumination (such as laser or infrared illuminators).
- imaging means for capturing images of the airfield runway or taxiway with automated, computer-assisted, and/or manual zoom-in view capabilities to ensure that all foreign objects and damages are accurately detected, identified and located on the airfield runway or taxiway.
- passive in nature, eliminating the requirement for installation of assisted illumination (such as laser or infrared illuminators) in dark or low illumination conditions.
- color images during day and night.

- processing video and/or still picture images obtained from a network of surveillance cameras using computer vision image processing techniques to detect, locate or identify FOD or airfield runway/taxiway damages. The surveillance cameras can be single or multiple, movable and/or static, flexibly locatable in the designated area of surveillance.
- The cameras may be deployed at greater distance from the runway or taxiway due to the improved image processing using adaptive image processing in the example embodiments compared to existing systems, which can reduce the number of cameras used and/or reduce "interference" with the existing infrastructure, and/or reduce obstruction near the runway.

The BDA System can be configured to operate as a Foreign Object, Debris (FOD) detection system during Normal State (Peace Time). When an impending air raid warning is received, the BDA System may go into a Warning State and the BDA system switches to include airfield damage detection, measurement and classification in its operation. The airfield damage detection/measurement/classification results will lead to the computation of the MAOS and MOS required for safe aircraft takeoff and landing that avoids any damages due to weapon impact in the airfield.

With regard to the Video Processing Unit 1407 in Figure 14 and the Management Server 1409 in Figure 14, each Video Processing Unit 1407 is responsible for detecting, measuring and classifying airfield runway damage items from one camera view angle (based on video/image from a single EOS) and sending the detection, measurement and classification results to the Management Server 1409 for consolidation and optimisation. The Management Server 1409 can perform optimisation of the video/image and/or FOD or damage detection/measurement/classification results output by multiple Video Processing Units 1407 based on video/images captured by multiple camera views. Such optimisation includes fusing multiple input images of the same area to provide resultant images of the area that is more informative than any of the input images. The Management Server 1409 may also provide stitched airfield images with the airfield damage areas highlighted, which is useful for displaying on the Display Module 1157 (Figure 11) and 1413 (Figure 14).

The Management Server 1409 may also be responsible for starting the whole BDA process of the BDA system, including the various processes running on the various Video Processing Units 1407 and the Management Server 1409. The Server processes (running on the Management Server 1409) will receive FOD and/or damage detection, measurement and classification results from the various Video Processing Units 1407.

After that the Server processes executed will further process and optimise the detection, measurement and classification results pertaining to the same FOD or damage item (such as crater or UXO) as detected by multiple adjacent EOS (with different camera view angles) and output by multiple Video Processing Units 1407. The Server processes can perform processing based on certain criteria such as closest distance, similar size etc for each detected airfield damage item. Subsequently, the Server processes could even re-measure and/or re-classify the FOD or airfield damage items discovered and compute the damage item's dimension using at least two camera view angles (based on video/image from 2 adjacent EOS) for improved detection, measurement and classification accuracy. Using images of two camera view angles is an improvement as the Server process could optimally fuse the multiple input images of the same area from the two camera views to provide resultant images of the area that is more informative than any of the input images received from a single EOS. It also helps to overcome problem of occlusion of FOD or damage which could occur when using a single EOS to cover a particular area of the airfield

When in a Warning State, the BDA System's Server process will start the Weapon Impact Surveillance System (WISS) processes. The various processes of the Video Processing Units 1407 will process the videos/images from the various EOS simultaneously. When the Server processes starts the WISS processes, the WISS processes may immediately start a weapon impact detection process so that any detected weapon impact will immediately trigger an alert to the Management Server 1409 and the impact location may be plotted on a digital airfield map on the Operator Workstation 1413.

When an air raid is over and the state of the BDA system changes to "Post Attack", an Airfield Commander may decide to perform BDA damage detection, measurement and classification and MAOS and MOS computation. A manual trigger may be provided to the commander to allow the commander to activate the various BDA processes to start the detailed BDA FOD and/or airfield damage detection, measurement and classification.

When processors used in the BDA system complete single camera view BDA detection, measurement and classification, the results may be consolidated and further optimized by the Server process. Any duplicated BDA FOD and airfield damage detections/measurements/classifications could be re-classified and re-measured with higher accuracy and certainty by the Server processes.

The final BDA FOD and/or damage detection, measurement and classification results may be sent to the MAOS/MOS computation application for MAOS/MOS computation.

The BDA system may be configured to execute a baseline learning process to acquire a complete set of images of the airfield (also known as " airfield baseline images"). Baseline images refer to images of the airfield when there are no unknown foreign objects, debris or damage, or no unknown changes to the camera views of the airfield at the point of capturing the baseline images.

The BDA system scans one cycle of all the sectors/sub-sectors using the EOS to generate the airfield baseline images and then enters into a Quick Scan Stitching and Detection Loop. A sector refers to a designated area in the airfield. Sub-sectors are further partitions within a sector. The Quick Scan Stitching and Detection Loop continues to scan the airfield and stitch various sub-sector images together. It also detects the major differences on the airfield image after comparing it with the baseline images. The areas with significant differences on the airfield are highlighted, for instance, by colour, to allow the airfield commander to zoom-in onto these areas on a display for initial rapid damage assessment during or after the Hence, images captured by the EOS (i.e. one or more cameras) are stitched together and areas of differences between earlier captured stitched images and later captured stitched images are highlighted in the later captured stitched images of the airfield runway or taxiway.

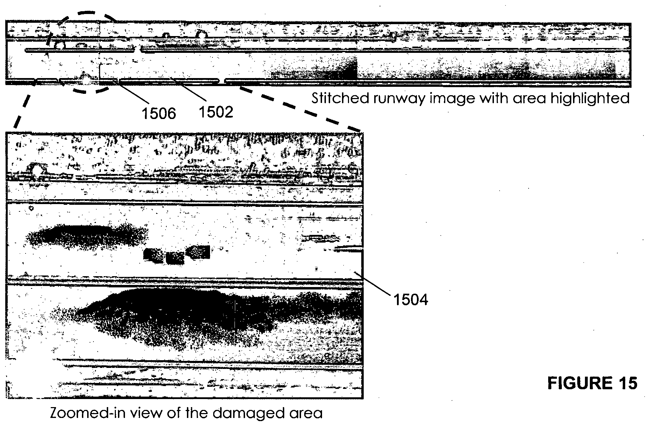

Figure 15 illustrates a stitched runway image 1502 with a damaged portion 1506 highlighted. The stitched image is generated by the Quick Scan Stitching and Detection Loop. A zoomed-in view 1504 of the damaged portion is also shown in Figure 15. The stitched airfield runway image 1502 shows that a portion 1506 of the runway is badly damaged during the air raid. The zoomed-in view 1504 is a clear indication of the damaged items on the runway and is useful for early airfield damage assessment by the Airfield Commander.

The Quick Scan Stitching and Detection Loop may be configured to continue running in an endless loop to provide updated stitched airfield runway images until for instance an air raid is over and the BDA system goes into "Post Attack". When that happens, the Airfield Commander will trigger the BDA System to start BDA airfield damage detection measurement and classification process.

The BDA System may then perform a full-cycle detection to extract all potential damage items in the airfield. After that it starts to classify and measure the individual damage items (such as craters or UXOs). The final detection, measurement and classification result (output from the various Video Processing Units 1407) will be sent to the Server for consolidation and optimisation (i.e. fusing of multiple images and/or detection/measurement/classification results to get more informative images).

Two image processing based detectors may be used concurrently in the BDA system to detect a foreign object, debris or damage in the airfield. One of the detectors could be a region based detector, which includes comparing grayscale views of the captured images of an area to identify regions that have changed in the area that could suggest presence of a foreign object, debris or damage in the airfield. However, due to changing weather conditions, region based detectors alone may not be reliable. They tend to generate excessive false detection when the light changes cause the grayscale view of the regions to change. On the other hand, an edge based detector, which is used to detect edges (i.e. border or outline) of objects in images is less sensitive to lighting changes and could still be able to detect edges of the object even when the weather conditions changes.

It could be that the primary detector used is the edge based detector and the secondary detector is the region based detector. During operation, the regions in the captured images identified as possibly having a foreign object, debris or damage is first determined by the region based detector. The processed output image of the region based detector is then compared with the processed output image of the edge based detector, which outlines all detected edges. Identified regions in the processed output image of the region based detector that do not show strong edge components (i.e. good outlines) in the output image of the edge based detector are discarded and regarded as unreliable. The identified regions having strong edge components would be sent for further processing by, for instance, the BDA Location Extraction Module 1147 in Figure 11 to extract the location information of the region having the strong edge components that was detected and the BDA Size Measurement Module 1149 in Figure 11 to measure the region having the strong edge components in the images by pixel level and translate the measurements into physical dimensions. The physical dimensions could then be classified to determine, for instance, what type of damage (crater, camouflet, spall, UXO) or FOD the identified regions in the images actually are.

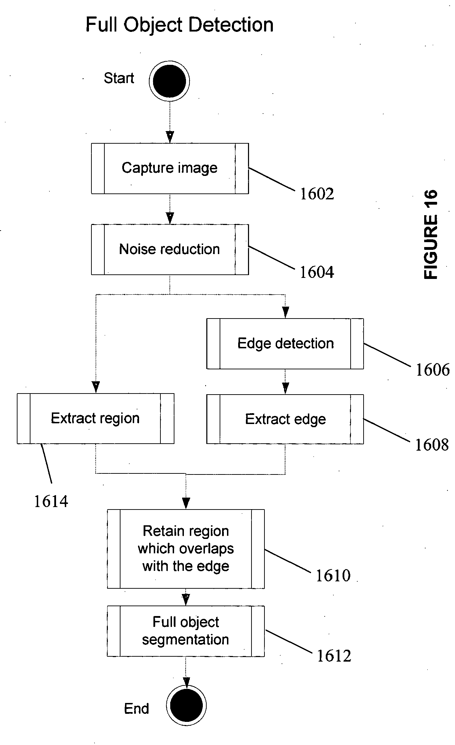

Figure 16 shows a flowchart of a detection algorithm for the instance where the two detectors, region based detector and edge based detector are used.

At step 1602, images are retrieved from the one or more cameras (i.e. EOS) configured to capture images of the airfield.

At step 1604, noise reduction is performed to reduce noise present in the images retrieved at step 1602.

At step 1606, edge detection is performed by the edge based detector to detect presence of edges of all objects in the images subjected to step 1604.

At step 1608, information relating to the edges or outlines detected at step 1606 are extracted. The edge components need to be regarded as strong before they are extracted. A threshold could be predetermined to be compared against to determine what is regarded as strong.

Concurrently, step 1614 is carried out by the region based detector on the images subjected to step 1604 to extract information relating to the regions in the images where there could possibly be a foreign object, debris or damage.

At step 1610, the information of the extracted regions at step 1614 and the extracted information of the edges detected at step 1608 are compared. Only the regions overlapping with the edges extracted are retained as output of step 1610 and stored.

At step 1612, full object segmentation is carried on the output of step 1610. This involves analysing the images of the output of step 1610 and classifying the detected regions to determine what type of damage (crater, camouflet, spall, UXO) or FOD they actually are.

It is possible that during an air raid, an EOS node tower (i.e. a tower in the airfield having one or more mounted cameras) becomes twisted, offset or damaged. In this case, when the BDA System starts to capture airfield images in the sectors/sub-sectors of the airfield and compares them with baseline (or reference) images of the airfield before the tower became twisted, offset or damaged, many undesirable artifacts may be generated due to the misalignment in the affected camera views caused by the tower that is twisted, offset or damaged. This will generate false alerts and cause detection errors.

In order to minimize the number of false alerts caused by such EOS node tower offsets, the BDA system includes an image offset compensator for performing an automatic calibration compensation method that is used to correct the effect of position offsets of the common EOS node tower that is captured in current images and baseline images (i.e. reference images) so that a corrected image could be produced for accurate damage detection, measurement and classification.

A technique used for EOS node alignment correction is to make use of highly visible markers from the nearby landmarks or from landmarks within each airfield sub-sector, such as runway edge lights, signage and EOS tower structures. These markers are captured as references during the calibration process. During detection, when the EOS starts a detection cycle, it first checks all marker positions at various sub-sectors with confidence scores exceeding a pre-set threshold level. An appropriate offset is then computed. After that it starts to detect the airfield damages with the computed offset applied to each sub-sector images accordingly.

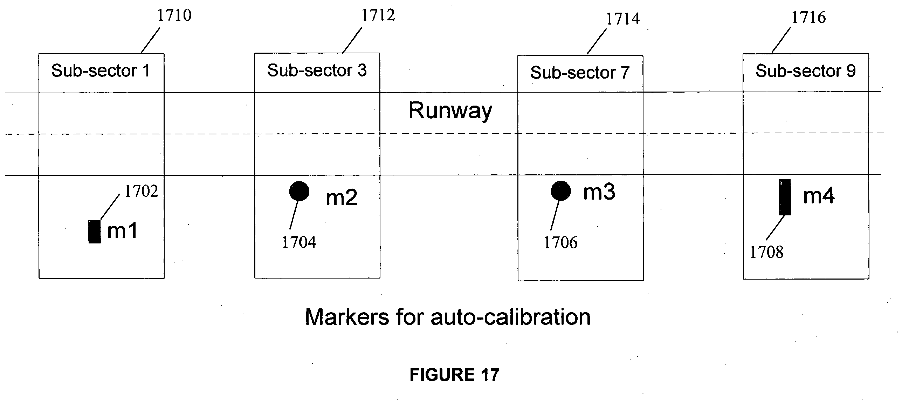

Figure 17 illustrates the markers used for the automatic calibration correction. Four markers 1702, 1704, 1706 and 1708 in four sub-sectors 1710, 1712, 1714 and 1716 are selected out of an area with 9 sub-sectors in the airfield for calibration correction.

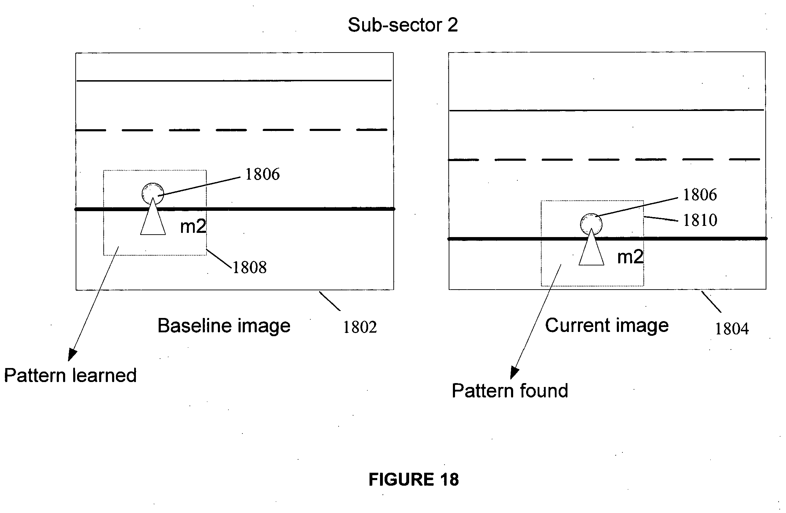

Figure 18 shows two images 1802 and 1804. The image 1802 (baseline image) shows a baseline image of the sub-sector 3 1712 (Figure 17) during the calibration process. The region around an m2 marker 1806 (in this case an edge light of a runway), marked by a box 1808, is selected as the reference target region for matching purposes. The image 1804 (current image) shows the current position of the m2 marker 1806 in a current image captured by a camera mounted to capture subsector 3 1712 (Figure 17). A box 1810 indicates the position of the m2 marker 1806 found in the current image and it is clearly offset from the m2 marker 1806 region marked out by box 1808 in the baseline image 1802.

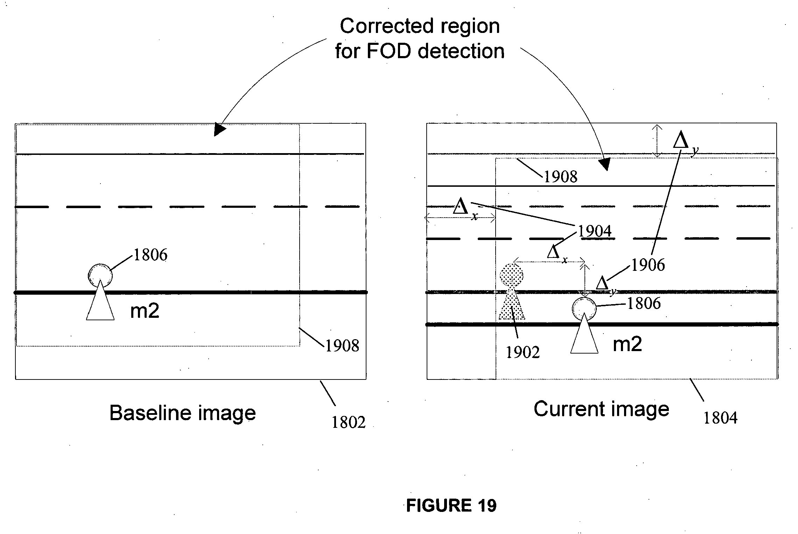

With reference to Figures 18 and 19, the BDA System will use a target finding technique such as pattern matching or blob detection, or a combination of both techniques to find the exact position of the m2 marker 1806 in the current image 1804. The offset in X-coordinates and Y-coordinates ($\Delta_x$ 1904, $\Delta_y$ 1906) (Figure 19) can be used to locate the corrected region 1908 in both the baseline image 1802 and the current image 1804 for foreign object, debris or damage detection and location. The region marked by the box 1908 in each image 1802 and 1804 would be taken to be the corrected region 1908.

It is appreciated that a confidence score of matching between a baseline image e.g. 1802 and a current image e.g. 1804 may be taken into consideration. Only when the confidence score is above a certain threshold will the correction start.

The use of multiple markers (i.e. common objects in the current image and baseline image) will enhance the robustness and reliability of calibration correction as one marker location may be too random and the matching may be inaccurate or the wrong pattern may be matched due to environmental changes or passing objects during certain times. Matching multiple markers provide more data for verification and better representation of the actual offset between a baseline image e.g. 1802 and a current image e.g. 1804 captured.

If we assume there are n marker locations, the matching confidence score is $C_i$ in which i = 1, *n*.

The offset is thus ($A_{xi}, \Delta_{yi}$), i = 1, *n*.

Assuming that the minimum confidence score is $T_c$. Then the actual offset can be the average drifting of valid markers that pass the threshold $T_c$: ($\overline{A_x}$, $\overline{\Delta_y}$) or could be obtained by using linear regression.

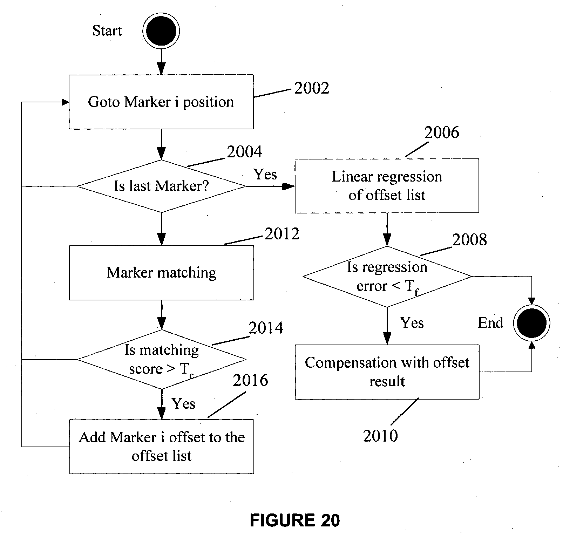

Figure 20 illustrates use of linear regression to determine the actual offset between a baseline (reference) image and a current image. It is assumed that there are multiple n marker positions already identified. Marker matching begins from a first marker to a last marker. Marker *i* refers to one of the markers from the first to the last. All markers which achieve high confidence scores are added to a list with X/Y (i.e. X-coordinates and Y coordinates) offset represented in terms of pixel values. $T_c$ is a predetermined minimum matching score that positively confirms a correct matching with high confidence when the actual matching score calculated exceeds it.

After the last marker is matched, the list is linearly fitted as the offset is supposed to be linear in the image. The fitting error is evaluated. If the fitting error is small, it means that the offset is consistent among those multiple markers and thus can be used to offset the current image and baseline image. If the fitting error is not small, the offset cannot be compensated. In this example, $T_f$ is the maximum offset error, measured in pixels.

At step 2002, to determine the actual offset, a marker *i* position is inspected, where marker *i* is one of the markers in the *n* number of marker positions.

At step 2004, the marker *i* position is checked to see if it is the last marker.

If marker i is the last marker, at step 2006, linear regression is performed based on an offset list containing all the offset values corresponding to the respective markers. It is noted that each marker will be able to generate its own set offset values after comparing the baseline image and the current image.

At step 2008, a check is performed to see if regression error is greater than the $T_f$ value.

If the check at step 2008 indicates that regression error is greater than the $T_f$ value, compensation is performed to offset the current image to acquire the corrected region at step 2010. Otherwise, the procedure ends.

If marker i is not the last marker at step 2004, marker matching for marker i takes place between the baseline image and the current image at step 2012. The offset value based on marker i is also determined.

At step 2014, a check is performed to see if a matching score determined by matching the marker *i* in the current image and the baseline image is greater than the threshold $T_c$ value.

If the threshold $T_c$ value is exceeded at step 2014, the offset values for marker i will be added into the offset list at step 2016. Otherwise, the procedure will go to step 2002.

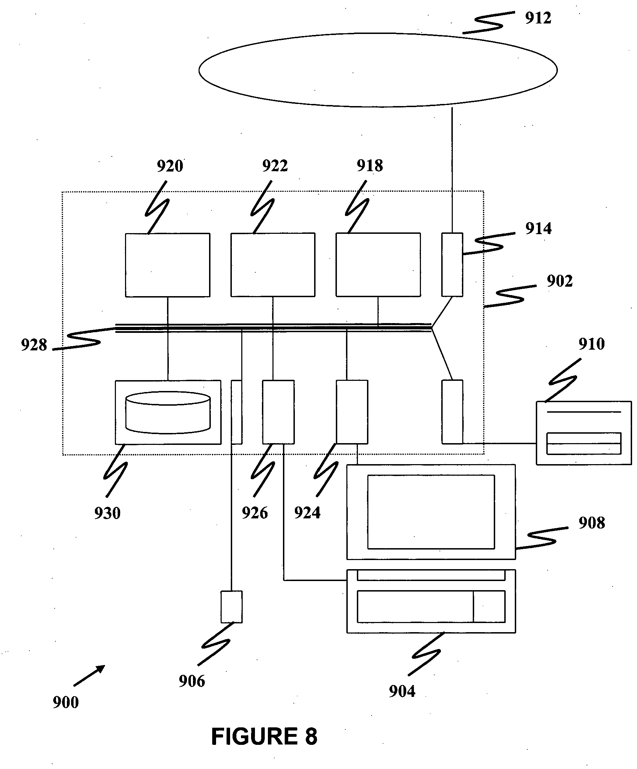

The method and system of the example embodiments described herein can be implemented on a computer system 900, schematically shown in Figure 8. It may be implemented as software, such as a computer program being executed within the computer system 900, and instructing the computer system 900 to conduct the method of the example embodiment.

The computer system 900 comprises a computer module 902, input modules such as a keyboard 904 and mouse 906 and a plurality of output devices such as a display 908, and printer 910.

The computer module 902 is connected to a computer network 912 via a suitable transceiver device 914, to enable access to e.g. network systems such as Local Area Network (LAN) or Wide Area Network (WAN).

The computer module 902 in the example includes a processor 918, a Random Access Memory (RAM) 920 and a Read Only Memory (ROM) 922. The computer module 902 also includes a number of Input/Output (I/O) interfaces, for example I/O interface 924 to the display 908, and I/O interface 926 to the keyboard 904.

The components of the computer module 902 typically communicate via an interconnected bus 928 and in a manner known to the person skilled in the relevant art.

The application program is typically supplied to the user of the computer system 900 encoded on a data storage medium such as a CD-ROM or flash memory carrier and read utilizing a corresponding data storage medium drive of a data storage device 930. The application program is read and controlled in its execution by the processor 918. Intermediate storage of program data maybe accomplished using RAM 920.

It is appreciated that references to an airfield herein covers all areas in the airfield, including runway and/or taxiway and/or access routes and/or infield/grass fields and/or apron and/or pavements. It is appreciated that any reference to surveillance for foreign object, debris or any type of damage and surveillance for weapon impact in an airfield runway or taxiway or airfield runway/taxiway could also be applied to other areas of the airfield such as access routes and/or infield/grass fields and/or apron and/or pavements.

It is appreciated that references to damage herein include cracks, crater, UXO, spall, camouflet.

**Claims**

1. A surveillance system (100, 500, 550) for detecting a foreign object, debris, or damage in an airfield, the surveillance system (100, 500) comprising:

   one or more cameras (108, 508, 551) configured to capture images of the airfield;
   a processing unit (1407) configured to detect a foreign object, debris or damage in the airfield from the images captured by the one or more cameras; and
   an image transmission module (133) configured to transmit images from the one or more cameras to the processing unit, **characterized in that** the surveillance system (100, 500, 550) comprises:

   a weapon impact surveillance system (950) configured to detect weapon impact in the airfield and direct the one or more cameras (108, 508, 551) to capture images in an area of the detected weapon impact, wherein the weapon impact is detected by the determination of presence of explosion, smoke, dust or flash caused by the weapon impact in the images.

2. The surveillance system (100, 500, 550) as claimed in claim 1, wherein the one or more cameras (108, 508, 551) configured to zoom in or focus on the area of the detected weapon impact to obtain images with details for detecting type of damage.

3. The surveillance system (100, 500, 550) as claimed in any one of the preceding claims, wherein the surveillance system (100, 500, 550) comprises a computation module configured to deprive a Minimum Operating Strip (MOS) for aircraft landing based on quantity, size and location of the foreign object, debris, or damage detected in the airfield.

4. The surveillance system (100, 500, 550) of any one of the preceding claims, wherein the processing unit is configured to detect cracks, crater, camouflet, spall, UXO, or an animal in the airfield.

5. The surveillance system (100, 500, 550) as claimed in claim 4, wherein the processing unit (1407) is configured to determine size of a crater, camouflet or spall by detecting amount of debris around the crater, camouflet or spall respectively.

6. The surveillance system (100, 500, 550) as claimed in any one of the preceding claims, wherein the processing unit (1407) is configured for measuring size or physical attributes of the foreign object, debris, or damage.

7. The surveillance system (100, 500, 550) as claimed in any one of the preceding claims, wherein the surveillance system (100, 500, 550) comprises a region based detector configured to detect a region in the images captured that can be a foreign object, debris or damage; and an edge based detector configured to detect edges of all objects in the images captured, wherein the region detected by the region based detector in the images that is overlapping with the edges detected by the edge based detector in the images are stored.

8. The surveillance system (100, 500, 550) of any one of the preceding claims, wherein the images captured by the one or more cameras (108, 508, 551) are stitched together and areas of differences between earlier captured stitched images and later captured stitched images are highlighted in the later captured stitched images.

9. The surveillance system (100, 500, 550) as claimed in any one of the preceding claims, the surveillance system (100, 500, 550) comprises a repair estimation and planning module (153) configured to estimate and planning repair work based on quantity, size and location of the weapon impact or information of the airfield damage.

10. The surveillance system (100, 500, 550) as claimed in any one of the preceding claims, wherein the surveillance system comprises one or more mobile handheld devices (1417) configured to receive remote alert and critical information to repair damage or remove foreign object in the airfield.

11. The surveillance system (100, 500, 550) as claimed in any one of the preceding claims, wherein the surveillance system (100, 500, 550) comprises an image offset compensator configured to correct offset between a currently captured image and a reference image taken by a camera based on position of a common object located in the currently captured image and a reference image.

**12.** The surveillance system (100, 500, 550) as claimed in claim 11, wherein the image offset compensator uses more than one common object in the currently captured image and the reference image to determine the offset to correct between the currently captured image and the reference image.

**13.** The surveillance system (100, 500, 550) as claimed in claim 12, wherein linear regression is used to determine the offset to correct between the currently captured image and the reference image, and an offset value calculated based on a common object in the currently captured image and the reference image is considered for linear regression if a score determined by matching the common object in the currently captured image and the reference image is greater than a predetermined threshold value.

**14.** The surveillance system (100, 500, 550) as claimed in any one of the preceding claims, wherein the surveillance system (100, 500, 550) further comprises a computation module (151) configured to derive a Minimum Airfield Operating Surface (MAOS) for aircraft based on quantity, size and location of the foreign object, debris, or damage detected in the airfield.

**Patentansprüche**

**1.** Überwachungssystem (100, 500, 550) zum Erfassen eines Fremdobjekts, von Trümmern, oder einem Schaden auf einem Flugplatz, wobei das Überwachungssystem (100, 500) Folgendes aufweist:

eine oder mehrere Kameras (108, 508, 551), die so konfiguriert sind, dass sie Bilder des Flugplatzes aufzeichnen;
eine Verarbeitungseinheit (1407), die so konfiguriert ist, dass sie ein Fremdobjekt, Trümmer oder einen Schaden auf dem Flugplatz aus den von der einen oder den mehreren Kameras aufgezeichneten Bild erfasst; und
ein Bildübertragungsmodul (133), das so konfiguriert ist, dass es Bilder von der einen oder den mehreren Kameras an die Verarbeitungseinheit überträgt, **dadurch gekennzeichnet, dass** das Übertragungssystem (100, 500, 550) aufweist:

ein Waffeneinwirkungsüberwachungssystem (950), das so konfiguriert ist, dass es eine Waffeneinwirkung auf den Flugplatz erfasst und die eine oder die mehreren Kameras (108, 508, 551) so steuert, dass sie Bilder in einem Bereich der erfassten Waffeneinwirkung aufzeichnen, wobei die Waffeneinwirkung durch das Feststellen des Vorhandenseins einer Explosion, von Rauch, Staub oder einem Blitz, der durch die Waffeneinwirkung in den Bildern verursacht wird, erfasst wird.

**2.** Überwachungssystem (100, 500, 550) nach Anspruch 1, wobei die eine oder die mehreren Kameras (108, 508, 551) so konfiguriert sind, dass sie in den Bereich der erfassten Waffeneinwirkung hineinzoomen oder sich darauf fokussieren, um detaillierte Bilder zu erhalten, um die Art des Schadens zu erfassen.

**3.** Überwachungssystem (100, 500, 550) nach einem der vorgenannten Ansprüche, wobei das Überwachungssystem (100, 500, 550) ein Berechnungsmodul aufweist, das so konfigurier ist, dass es einen Minimalbetriebsstreifen (MOS) zum Landen von Flugzeugen auf Basis der Menge, Größe und des Orts des Fremdobjekts, der Trümmer oder des Schadens, der auf dem Flugplatz erfasst wurde, ableitet.

**4.** Überwachungssystem (100, 500, 550) nach einem der vorgenannten Ansprüche, wobei die Verarbeitungseinheit so konfiguriert ist, dass sie Risse, Krater, Aufweitungen, Splitter, Blindgänger oder ein Tier auf dem Flugplatz erfasst.

**5.** Überwachungssystem (100, 500, 550) nach Anspruch 4, wobei die Verarbeitungseinheit (1407) so konfiguriert ist, dass sie die Größe eines Kraters, einer Ausweitung oder eines Splitters feststellt, indem eine Menge an Trümmern um den Krater, die Ausweitung oder den Splitter erfasst wird.

**6.** Überwachungssystem (100, 500, 550) nach einem der vorgenannten Ansprüche, wobei die Verarbeitungseinheit (1407) so konfiguriert ist, dass sie die Größe oder physikalischen Eigenschaften des Fremdobjekts, der Trümmer oder des Schadens misst.

**7.** Überwachungssystem (100, 500, 550) nach einem der vorgenannten Ansprüche, wobei das Überwachungssystem (100, 500, 550) Folgendes aufweist:

einen regionsbasierten Detektor, der so konfiguriert ist, dass er eine Region in den aufgezeichneten Bildern erfasst, bei der es sich um ein Fremdobjekt, Trümmer oder einen Schaden handeln kann; und
einen kantenbasierten Detektor, der so konfiguriert ist, dass er die Kanten aller Objekte in den aufgezeichneten Bildern erfasst, wobei die von dem regionsbasierten Detektor erfasste Region in den Bildern, die sich mit den von dem kantenbasierten Detektor in den Bildern erfassten Kanten überschneidet, gespeichert wird.

8. Überwachungssystem (100, 500, 550) nach einem der vorgenannten Ansprüche, wobei die Bilder, die von der einen oder den mehreren Kameras (108, 508, 551) aufgezeichnet werden, zusammengefügt werden und Bereiche mit Unterschieden zwischen früher aufgezeichneten, zusammengefassten Bildern und später aufgezeichneten, zusammengefassten Bildern in den später aufgezeichneten, zusammengefassten Bildern hervorgehoben sind.

9. Überwachungssystem (100, 500, 550) nach einem der vorgenannten Ansprüche, wobei das Überwachungssystem (100, 500, 550) ein Reparaturschätzungs- und Planungs-Modul (153) aufweist, das so konfiguriert ist, dass es Reparaturarbeiten auf Basis der Menge, Größe und des Orts der Waffeneinwirkung oder der Informationen über den Schaden auf dem Flugplatz schätzt und plant.

10. Überwachungssystem (100, 500, 550) nach einem der vorgenannten Ansprüche, wobei das Überwachungssystem eine oder mehrere Handvorrichtungen (1417) aufweist, die so konfiguriert sind, dass sie Alarm-Ferninformationen empfangen, die sich auf das Reparieren eines Schadens oder das Entfernen von Fremdobjekten von dem Flugplatz beziehen.

11. Überwachungssystem (100, 500, 550) nach einem der vorgenannten Ansprüche, wobei das Überwachungssystem (100, 500, 550) einen Bildversatzkompensator aufweist, der so konfiguriert ist, dass er einen Versatz zwischen einem gegenwärtig aufgezeichneten Bild und einem Referenzbild, das von einer Kamera aufgenommen wird, auf Basis einer Position eines gemeinsamen Objekts, das sich in dem gegenwärtig aufgezeichneten Bild und einem Referenzbild befindet, korrigiert.

12. Überwachungssystem (100, 500, 550) nach Anspruch 11, wobei der Bildversatzkompensator mehr als ein gemeinsames Objekt in dem gegenwärtig aufgezeichneten Bild und dem Referenzbild verwendet, um den zu korrgierenden Versatz zwischen dem gegenwärtig aufgezeichneten Bild und dem Referenzbild zu bestimmen.

13. Überwachungssystem (100, 500, 550) nach Anspruch 12, wobei die lineare Regression verwendet wird, um den zu korrigierenden Versatz zwischen dem gegenwärtig aufgezeichneten Bild und dem Referenzbild zu bestimmen, und wobei ein Versatzwert, der auf Basis eines gemeinsamen Objekts in dem gegenwärtig aufgezeichneten Bild und dem Referenzbild berechnet wird, für die lineare Regression in Betracht gezogen wird, falls ein Score, der durch Anpassen des gemeinsamen Objekts in dem gegenwärtig aufgezeichneten Bild und dem Referenzbild bestimmt wird, größer ist als ein vorgegebener Schwellenwert.

14. Überwachungssystem (100, 500, 550) nach einem der vorgenannten Ansprüche, wobei das Überwachungssystem (100, 500, 550) ferner ein Berechnungsmodul (151) aufweist, das so konfiguriert ist, dass es eine Minimalflugplatzbetriebsoberfläche (MAOS) für Flugzeuge auf Basis der Menge, Größe und des Orts des Fremdobjekts, der Trümmer oder des Schadens, der auf dem Flugplatz erfasst wurde, ableitet.

## Revendications

1. Système de surveillance (100, 500, 550) pour détecter un corps étranger, des débris ou un endommagement dans un terrain d'aviation, le système de surveillance (100, 500) comprenant :

   une ou plusieurs caméras (108, 508, 551) configurées pour capturer des images du terrain d'aviation ;
   une unité de traitement (1407) configurée pour détecter un corps étranger, des débris ou un endommagement dans le terrain d'aviation à partir des images capturées par la ou les plusieurs caméras ; et
   un module de transmission d'image (133) configuré pour transmettre des images depuis l'une ou les plusieurs caméras vers l'unité de traitement, **caractérisé en ce que** le système de surveillance (100, 500, 550) comprend :

   un système de surveillance d'impact d'arme (950) configuré pour détecter un impact d'arme dans le terrain d'aviation et orienter l'une ou les plusieurs caméras (108, 508, 551) pour capturer des images dans une zone de l'impact d'arme détecté, dans lequel l'impact d'arme est détecté par la détermination de présence d'explosion, de fumée, de poussière ou d'éclair provoqué par l'impact d'arme dans les images.

2. Système de surveillance (100, 500, 550) selon la revendication 1, dans lequel l'une ou plusieurs les caméras (108, 508, 551) configurées pour faire un zoom ou se focaliser sur la zone de l'impact d'arme détecté pour obtenir des images avec des détails pour détecter le type d'endommagement.

3. Système de surveillance (100, 500, 550) selon l'une quelconque des revendications précédentes, dans lequel le système de surveillance (100, 500, 550) comprend un module de calcul configuré pour déduire une piste d'atterrissage minimale (MOS) pour l'atterrissage d'avion sur la base de la quantité, de la taille et de l'emplacement du corps étranger, des débris ou de l'endommagement détecté dans le terrain d'aviation.

4. Système de surveillance (100, 500, 550) selon l'une quelconque des revendications précédentes, dans lequel l'unité de traitement est configurée pour détecter des fissures, un cratère, un camouflet, un écaillage, une UXO ou un animal dans le terrain d'aviation.

5. Système de surveillance (100, 500, 550) selon la revendication 4, dans lequel l'unité de traitement (1407) est configurée pour déterminer la taille d'un cratère, d'un camouflet ou d'un écaillage en détectant la quantité de débris autour du cratère, du camouflet ou de l'écaillage respectivement.

6. Système de surveillance (100, 500, 550) selon l'une quelconque des revendications précédentes, dans lequel l'unité de traitement (1407) est configurée pour mesurer la taille ou les attributs physiques du corps étranger, des débris ou de l'endommagement.

7. Système de surveillance (100, 500, 550) selon l'une quelconque des revendications précédentes, dans lequel le système de surveillance (100, 500, 550) comprend un détecteur basé sur des régions configuré pour détecter une région dans les images capturées qui peut être un corps étranger, des débris ou un endommagement ; et un détecteur basé sur les bords configuré pour détecter des bords de tous les objets dans les images capturées, dans lequel la région détectée par le détecteur basé sur les régions dans les images, qui chevauche les bords détectés par le détecteur basé sur les bords dans les images, est enregistrée.

8. Système de surveillance (100, 500, 550) selon l'une quelconque des revendications précédentes, dans lequel les images capturées par l'une ou les plusieurs caméras (108, 508, 551) sont assemblées ensemble et des zones de différences entre des images assemblées précédemment capturées et des images assemblées ultérieurement capturées sont mises en évidence dans les images assemblées ultérieurement capturées.

9. Système de surveillance (100, 500, 550) selon l'une quelconque des revendications précédentes, dans lequel le système de surveillance (100, 500, 550) comprend un module d'estimation et de planification de réparation (153) configuré pour estimer et planifier une opération de réparation sur la base de la quantité, de la taille et de l'emplacement de l'impact d'arme ou d'informations sur l'endommagement du terrain d'aviation.

10. Système de surveillance (100, 500, 550) selon l'une quelconque des revendications précédentes, dans lequel le système de surveillance comprend un ou plusieurs dispositifs portatifs mobiles (1417) configurés pour recevoir une alerte et des informations critiques à distance pour réparer un endommagement ou retirer un corps étranger dans le terrain d'aviation.

11. Système de surveillance (100, 500, 550) selon l'une quelconque des revendications précédentes, dans lequel le système de surveillance (100, 500, 550) comprend un compensateur de décalage d'image configuré pour corriger un décalage entre une image actuellement capturée et une image de référence prise par une caméra sur la base d'une position d'un corps commun localisé dans l'image actuellement capturée et dans une image de référence.

12. Système de surveillance (100, 500, 550) selon la revendication 11, dans lequel le compensateur de décalage d'image utilise plusieurs corps communs dans l'image actuellement capturée et l'image de référence pour déterminer le décalage à corriger entre l'image actuellement capturée et l'image de référence.

13. Système de surveillance (100, 500, 550) selon la revendication 12, dans lequel une régression linéaire est utilisée pour déterminer le décalage à corriger entre l'image actuellement capturée et l'image de référence, et une valeur de décalage calculée sur la base d'un corps commun dans l'image actuellement capturée et l'image de référence est prise en compte pour la régression linéaire si une valeur déterminée en faisant correspondre le corps commun dans l'image actuellement capturée et l'image de référence est supérieur à une valeur seuil prédéterminée.

14. Système de surveillance (100, 500, 550) selon l'une quelconque des revendications précédentes, dans lequel le système de surveillance (100, 500, 550) comprend en outre un module de calcul (151) configuré pour déduire une aire d'atterrissage minimale sur terrain d'atterrissage (MAOS) pour un avion sur la base de la quantité, de la taille et de l'emplacement du corps étranger, des débris ou de l'endommagement détecté dans le terrain d'aviation.

**FIGURE 1A**

**FIGURE 1B**

Figure 1 C

Runway Image Capture 201

Image Enhancement 203

Abnormal Light Detection 205

Estimate Optimal Detection Parameters and Adaptive Pixel Level Edge Extraction 207

Temporal Filtering 209

Adaptive Background Learning 211

Composite Background Image 213

Extract Suspected Edges 215

Edge Filtering 217

Object Classification 219

Recovering FOD on Runway 221

**FIGURE 2**

FIGURE 3A

A

**319**
Motion edge filtering to generate static edge map

**321**
Temporal filtering to extract robust edge map

**323**
Adaptive background learned? — No

Yes

**327**
Reach predefined condition? — No (↑ B̄)

Yes →

**329**
Flag adaptive background as learned (↑ B)

**325**
Initialize/Update adaptive background map

Initialization

**333**
Load previously saved day/night background map + seasonal marking map

**331**
Generate composite background map based on adaptive background map + last saved background map + seasonal marking map

**335**
Extract suspected edge map by comparing the edge map and the composite background map

B (↑)

No

**341**
Is day/night transition? — Yes →

**343**
Load last day/night background map for immediate use

**337**
Filter unwanted edge due to sudden environmental change e.g. reflection due to rain...

**339**
Update adaptive background map

**345**
Save adaptive background map as day/night background edge map for the next day use

**347**
Compute the edge parameters e.g. size, area... from the suspected edge map

**351**
Overlay graphics on the suspected region and alarm operators

**353**
Allow operators to control pan/tilt and zoom in for visual verification

**349**
No ← B    Exceed threshold? — Yes

**355**
B ← No    Is FOD?    Yes

**359**
FOD recovery process ←

**357**
Notify ground team through wireless means e.g. SMS

FIGURE 3B

31

**FIGURE 4**

**FIGURE 5**

FIGURE 6

**FIGURE 7**

**FIGURE 8**

FIGURE 9

FIGURE 10

EP 2 678 835 B1

1129          1131

EO Sensor Module          EO Sensor & PTZ Module

1133 ——  Image Transmission Module

Video Processing

1135 —  Image Acquisition Module

1137  Image Stabilization Module

1139 ——  Reference Image Calculation Module

1141  Foreground Abstraction Module

1143  Impact Detection Module          1145  Damage/FOD Detection Module

1147 ——  BDA Location Extraction Module (new)

1149  BDA Size Measurement Module (new)

1151 ——  Best MOS computation Module

1153  Repair estimation & planning Module          1103

1155  Recording Module

1157  Display Module

**FIGURE 11**

FIGURE 12

EP 2 678 835 B1

## FIGURE 13

EP 2 678 835 B1

**FIGURE 14**

EP 2 678 835 B1

Stitched runway image with area highlighted

1506    1502

1504

Zoomed-in view of the damaged area

**FIGURE 15**

## Full Object Detection

Start ⬤

Capture image — 1602

Noise reduction — 1604

Edge detection — 1606

Extract region

Extract edge — 1608

1614

Retain region which overlaps with the edge — 1610

Full object segmentation — 1612

End ⬤

**FIGURE 16**

1710　　　　　　　　　　1712　　　　　　　　　　1714　　　　　　　　1716

| Sub-sector 1 | Sub-sector 3 | Sub-sector 7 | Sub-sector 9 |
|---|---|---|---|

Runway

1702

m1

● m2

1704

● m3

1706

m4

1708

Markers for auto-calibration

FIGURE 17

Sub-sector 2

Baseline image 1802

Pattern learned

Current image 1804

Pattern found

**FIGURE 18**

EP 2 678 835 B1

Corrected region
for FOD detection

1908

1806

m2

1908

Baseline image

1802

$\Delta_y$

1908

$\Delta_x$

1904

$\Delta_x$

1906

$\Delta_y$

1806

1902

m2

Current image

1804

FIGURE 19

FIGURE 20

**EP 2 678 835 B1**

## REFERENCES CITED IN THE DESCRIPTION

**Patent documents cited in the description**

- WO 20097029051 A1